# FASCICULE DE BREVET EUROPEEN

(11) **EP 4 308 451 B1**
(45) Date de publication et mention de la délivrance du brevet: **07.05.2025**
(21) Numéro de dépôt: 22716225.2
(22) Date de dépôt: 18.03.2022
(51) Int. Cl.: B63H 9/072

(54) **SYSTEME DE TRACTION A AILE CAPTIVE ET A LIGNE D'ARRIMAGE VOLANTE**
SCHLEPPSYSTEM MIT GEFANGENEM SEGEL UND FLIEGENDER FESTMACHLEINE
HAULING SYSTEM INVOLVING A CAPTIVE SAIL AND A FLYING MOORING LINE

(30) Priorité: 19.03.2021 FR 2102788
(43) Date de publication de la demande: 24.01.2024
(73) Titulaire: Kawasaki Kisen Kaisha Ltd, Tokyo 100-8540 (JP)
(72) Inventeur: VERFAILLIE, Swann, 31000 Toulouse (FR); FANTIN, Nicolas, 31140 Launaguet (FR); JAN, Stéphane, 31450 Montgiscard (FR)
(74) Mandataire: Junca, Eric
(86) Numéro de dépôt international: PCT/EP2022/057122
(87) Numéro de publication internationale: WO 2022/195060

(56) Documents cités:
- WO-A1-2009/026939
- WO-A1-2017/085501
- WO-A1-2019/239044
- US-B2- 7 866 271

## Description

### DOMAINE TECHNIQUE

L'invention vise le domaine des systèmes de traction à aile captive qui sont adaptés à déployer et replier une aile de traction par rapport à une plateforme de base, cette aile de traction étant adaptée à générer une force de traction sous l'effet du vent.

De tels systèmes de traction à aile captive permettent ainsi le déploiement d'une aile de traction volante servant à la propulsion d'un véhicule, notamment un navire (en tant que mode de propulsion principal, ou à titre d'assistance), pour la production d'électricité, ou pour toute application tirant profit d'une telle force de traction.

### ART ANTÉRIEUR

La demande de brevet US7866271 décrit un système de déploiement pour un dispositif de type aile volante. Ce système comporte un mât télescopique muni d'un adaptateur en tête de mât qui est adapté à pivoter autour de l'axe longitudinal du mât. Une ligne de vie chemine le long du mât, est saillante de l'adaptateur, et se rattache de manière coulissante au câble de traction qui retient l'aile volante, au niveau d'une déviation du câble de traction dont l'extrémité est reliée au bord d'attaque de l'aile.

L'aile volante comporte un bord d'attaque gonflable et la ligne de vie permet notamment de ramener ce bord d'attaque gonflable contre des moyens de gonflage prévus dans l'adaptateur de tête de mat, ce dernier présentant une forme complémentaire du profil du bord d'attaque de l'aile.

Pour replier l'aile volante, le câble de traction est enroulé par un treuil pour ramener l'aile à la hauteur du mat. La ligne de vie, qui jusqu'alors était rangée près du treuil durant la phase de vol, est ensuite tirée grâce à un charriot de point de récupération. Un guide coulisse le long du câble de traction depuis le charriot de point de récupération jusqu'au bord d'attaque de l'aile et tire l'aile contre le mât. L'aile est ensuite ferlée. Un autre système de déploiement selon l'art antérieur est décrit dans le document WO2009026939 A1.

### EXPOSÉ DE L'INVENTION

L'invention a pour but d'améliorer les systèmes de traction à aile captive de l'art antérieur.

À cet effet, l'invention vise un système de traction à aile captive comportant une aile de traction adaptée à générer une force de traction sous l'effet du vent, et adaptée à être déployée et repliée par rapport à une plateforme de base qui est munie d'un mât d'arrimage, l'aile de traction présentant un bord d'attaque et un bord de fuite, ce système de traction à aile captive comportant en outre :
- un dispositif volant de commande de trajectoire rattaché à l'aile de traction par des lignes de suspente fixes et des lignes de suspente mobiles, le dispositif volant de commande de trajectoire étant adapté à commander les lignes de suspentes mobiles ;
- une ligne de traction reliant le dispositif volant de commande de trajectoire à la plateforme de base.

Ce système de traction à aile captive comporte de plus :
- une ligne guide qui relie le bord d'attaque de l'aile de traction au dispositif volant de commande de trajectoire ;
- une ligne d'arrimage dont l'une des extrémités est reliée à la plateforme de base, et qui est raccordée de manière coulissante à la ligne guide ;
- un élément de renvoi qui est rattaché au mât d'arrimage et par lequel chemine la ligne d'arrimage entre sa première extrémité et son raccordement à la ligne guide.

Les lignes dont il est question, qu'il s'agisse des lignes de suspente, de la ligne de traction, de la ligne guide, ou de la ligne d'arrimage, peuvent être constituées par tout moyen permettant de réaliser un lien souple, par exemple un cordage, un câble textile et/ou métallique, etc.

Un tel système de traction à aile captive permet le déploiement et le repli de tout type d'aile de traction, y compris des ailes de traction dépourvues de bord d'attaque gonflable qui sont plus simples et plus performantes. L'ensemble du système est ainsi simplifié conjointement avec une modification de la procédure de déploiement et de repli.

Un tel système de traction à aile captive bénéficie de moyens d'arrimage (formés notamment de la ligne guide et de la ligne d'arrimage) qui permettent le maintien du bord d'attaque de l'aile de traction par l'élément de renvoi, contre le mât d'arrimage. Ces moyens d'arrimage sont mis en œuvre rapidement et simplement, sans aucune manipulation de lignes. En effet, le système réalise toutes les opérations de déploiement ou de repli de l'aile de traction sans que l'arrimage de l'aile ne nécessite d'opérations où des lignes sont saisies et mises en place dans des moyens d'accrochage et de traction. Ces opérations, nécessaires dans l'art antérieur, sont fastidieuses et difficilement automatisables. Lorsqu'elles sont automatisées, elles sont soumises à des défaillances intempestives (notamment dans les environnements difficiles tels que la propulsion d'un navire dans des conditions météo sévères). L'invention garantit des procédures de déploiement et de repli entièrement automatiques et sans aléa, même dans les conditions les plus difficiles, grâce à des moyens d'arrimage qui ne comportent que des lignes en prise.

Le maintien direct du bord d'attaque de l'aile contre le mât d'arrimage, par une traction à partir de l'élément de renvoi, ne nécessite aucune interface complexe qui épouserait la forme de l'aile de traction, ce qui permet une conception de mât d'arrimage plus simple, plus légère, et moins onéreuse.

Du côté du bord d'attaque de l'aile, cette dernière ne nécessite également pas d'interface complexe avec le mât d'arrimage, et les moyens d'arrimage permettent de garder un lien constant entre l'aile de traction et la plateforme de base, sans perturber le vol de l'aile de traction.

La ligne guide chemine, de manière similaire à une ligne de suspente, entre le dispositif volant de commande de trajectoire et le bord d'attaque de l'aile de traction. La ligne guide est rattachée d'une part au dispositif volant de commande de trajectoire, et d'autre part au bord d'attaque de l'aile de traction, éventuellement par le biais d'une pièce intermédiaire. La ligne guide présente de préférence une longueur suffisante pour ne pas engendrer de traction entre le bord d'attaque de l'aile et le dispositif volant de commande de trajectoire, afin de ne pas perturber le travail des lignes de suspente pendant le vol. La ligne guide ne perturbe cependant pas outre mesure le vol de l'aile, car sa masse et la trainée générée sont comparables à celle d'une ligne de suspente et aucune perturbation résultant par exemple d'un entortillement n'est à prévoir.

La ligne d'arrimage est quant à elle adaptée à coulisser le long de la ligne guide pour occuper au moins deux positions stables :
- une position d'arrimage, qui peut être verrouillée, dans laquelle l'extrémité de la ligne d'arrimage est en position haute, à proximité du bord d'attaque de l'aile de sorte qu'une traction sur la ligne d'arrimage entraine une traction sur le bord d'attaque de l'aile ;
- une position de vol dans laquelle l'extrémité de la ligne d'arrimage est disposée contre le dispositif volant de commande de trajectoire et repose sur ce dernier.

La position d'arrimage permet de verrouiller de manière dynamique le bord d'attaque de l'aile contre le mât d'arrimage, tandis que la position de vol permet de maintenir la ligne d'arrimage prête à l'emploi durant le vol, sans que la ligne d'arrimage ne génère d'effort sur le bord d'attaque de l'aile de traction, malgré sa longueur maximale de plusieurs centaines de mètres, avec la masse et la trainée associées.

Le dispositif volant de commande de trajectoire est un mécanisme dimensionné pour supporter à la fois les efforts de la ligne de traction, et les efforts de traction des lignes de suspente. Durant le vol, la quasi-totalité de la masse volante de la ligne d'arrimage est supportée par le dispositif de commande de trajectoire, sans influence sur la forme de l'aile de traction, ni sur l'aptitude du dispositif volant de commande de trajectoire au pilotage de l'aile, ni sur les mouvements de la ligne de traction.

Le travail conjoint de la ligne d'arrimage et de la ligne guide permettent de rendre indépendant, dans une certaine mesure, le travail de pilotage de la longueur de la ligne de traction d'une part, et de la longueur de la ligne d'arrimage d'autre part. Ainsi, la ligne d'arrimage peut être commandée pour verrouiller le bord d'attaque de l'aile, ou au contraire le relâcher par rapport au mât d'arrimage à différentes hauteurs sur le mât d'arrimage, indépendamment du fait que la ligne de traction soit ou non à une hauteur prédéterminée, et il n'est pas nécessaire d'agir sur la longueur de la ligne de traction pour agir sur la ligne d'arrimage. Les opérations de hissage ou d'affalage de l'aile de traction peuvent ainsi être menés en bénéficiant de la possibilité d'arrimer l'aile de traction sur toute la hauteur du mât de traction, et de maintenir dynamiquement cet arrimage pendant le mouvement de l'aile de traction le long du mât de traction.

Le système de traction à aile captive selon l'invention peut comporter les caractéristiques additionnelles suivantes, seules ou en combinaison :
- la ligne d'arrimage est raccordée de manière coulissante à la ligne guide par un coulisseau ;
- le coulisseau est fixé sur la ligne d'arrimage et est en liaison pivot glissant avec la ligne guide ;
- le coulisseau comporte une navette coulissante le long de la ligne guide, cette navette comportant un moyen de guidage traversé par la ligne d'arrimage ;
- la ligne guide est constituée d'une ligne double, et la navette est montée coulissante sur cette ligne double ;
- le dispositif volant de commande de trajectoire comporte un réceptacle adapté à recevoir le coulisseau ;
- le réceptacle comporte un bloqueur pour la ligne d'arrimage ;
- la ligne de traction est rattachée à la plateforme de base par l'intermédiaire d'un premier treuil adapté à ajuster la longueur de la ligne de traction, et la ligne d'arrimage est rattachée à la plateforme de base par l'intermédiaire d'un deuxième treuil adapté à ajuster la longueur de la ligne d'arrimage ;
- l'élément de renvoi est monté sur un charriot d'arrimage coulissant le long du mât d'arrimage ;
- le système comporte des moyens de motorisation du déplacement du charriot d'arrimage le long du mât d'arrimage ;
- le système comporte des moyens de rétention de l'extrémité de la ligne d'arrimage sur la ligne guide, ces moyens de rétention étant adaptés à occuper : une position libre dans laquelle l'extrémité de la ligne d'arrimage coulisse librement le long de la ligne guide ; et une position de retenue dans laquelle l'extrémité de la ligne d'arrimage est disposée dans une boucle formée par la ligne guide ;
- lesdits moyens de rétention comportent un organe de blocage qui est adapté, en position de retenue, à former sur la ligne guide une boucle de rétention de la ligne d'arrimage ;
- l'organe de blocage comporte un canal traversant dans lequel passe la ligne d'arrimage, lorsque les moyens de rétention sont en position libre, et dans lequel la ligne guide est passée en double, lorsque les moyens de rétention sont en position verrouillée ;
- la ligne guide est reliée au bord d'attaque de l'aile de traction par un élément de serrage débrayable solidaire du bord d'attaque de l'aile de traction, cet élément de serrage débrayable étant adapté à maintenir la ligne guide par serrage ;
- l'élément de serrage débrayable comporte un manchon traversé par la ligne guide, et la ligne guide est prolongée par une portion de ligne supplémentaire s'étendant au-delà du bord d'attaque de l'aile de traction ;
- la portion de ligne supplémentaire est reliée au bord de fuite de l'aile de traction ;
- l'organe de blocage comporte un logement adapté à recevoir l'élément de serrage débrayable ;
- ledit logement comporte un verrou de maintien de l'élément de serrage débrayable ;
- le système comporte : plusieurs lignes de pliage ayant chacune une extrémité fixée au bord d'attaque de l'aile de traction, en étant espacées les unes des autres le long de ce bord d'attaque ; un charriot supplémentaire adapté à coulisser le long du mât d'arrimage ; un dispositif de saisie qui est rattaché au bord d'attaque de l'aile de traction et qui comporte un bras d'accrochage muni d'une tige d'accrochage, l'une des lignes de pliage étant saillante dans le prolongement de la tige d'accrochage ; la ligne d'arrimage comportant une extrémité reliée au dispositif de saisie ;
- le dispositif de saisie comporte un logement pour la navette, la navette étant mobile entre une configuration de coulissement dans laquelle elle coulisse le long de la ligne guide, et une configuration d'arrimage dans laquelle la navette est disposée dans son logement ;
- le dispositif de saisie comporte un levier de commande du pivotement du bras d'accrochage vers sa position d'accrochage, ce levier étant adapté à être actionné par la navette lorsqu'elle rejoint sa configuration d'arrimage ;
- le système comporte un charriot d'arrimage adapté à coulisser le long du mat d'arrimage, ce charriot d'arrimage comportant une interface d'emboitement pour le dispositif de saisie ;
- le charriot d'arrimage comporte des moyens d'immobilisation du dispositif de saisie contre l'interface d'emboitement ;
- la navette présente une forme convexe adaptée à être logée dans une forme concave de l'interface d'emboitement, lorsque la navette est en configuration d'arrimage ;
- la navette présente une forme oblongue.

Selon un autre objet, l'invention vise un procédé de commande d'un système de traction à aile captive tel que décrit précédemment. Ce procédé peut comporter les caractéristiques suivantes, seules ou en combinaison :
- le procédé comporte une phase de déploiement et une phase de repli de l'aile de traction dans lesquelles le deuxième treuil est piloté conjointement au premier treuil de sorte que l'extrémité de la ligne d'arrimage coulisse le long de la ligne guide tandis que l'élément volant de commande de trajectoire est éloigné ou rapproché de la plateforme de base ;
- la phase de repli de l'aile de traction comporte : une étape de verrouillage de la ligne d'arrimage sur la ligne guide ; une étape d'arrimage dans laquelle une traction sur la ligne d'arrimage entraine une traction sur la ligne guide et sur le bord d'attaque de l'aile de traction ;
- la phase de repli comporte : une étape de débrayage de l'élément de serrage débrayable, la ligne guide étant ainsi libérée ; une étape de traction de la ligne d'arrimage entraine une traction sur la ligne guide et sur la portion de ligne supplémentaire ;
- la phase de déploiement et la phase de repli comportent des étapes de hissage ou d'affalage de l'aile de traction le long du mât d'arrimage, étapes durant lesquelles le charriot d'arrimage coulisse le long du mât d'arrimage et la ligne d'arrimage est maintenue en tension pour maintenir le bord d'attaque de l'aile de traction arrimé contre le mât d'arrimage ;
- le procédé comporte une phase de vol durant laquelle le coulisseau est disposé sur le réceptacle du dispositif volant de commande de trajectoire, et la longueur de la ligne d'arrimage est commandée pour maintenir du mou dans la ligne d'arrimage.

### PRÉSENTATION DES FIGURES

D'autres caractéristiques et avantages de l'invention ressortiront de la description non limitative qui suit, en référence aux dessins annexés dans lesquels :
- la [fig.1] est une vue en perspective d'un système de traction à aile captive selon l'invention, en phase de vol ;
- la [Fig.2] est une vue schématique de profil du système de traction à aile captive de la figure 1 ;
- la [Fig.3] est une vue similaire à la figure 1, l'aile de traction du système de traction à aile captive étant en cours de repli ;
- la [Fig.4] est une vue schématique de profil du système de traction à aile captive dans sa position de la figure 3 ;
- la [Fig.5] illustre une étape suivante dans le repli du système de traction à aile captive ;
- la [Fig.6] illustre une étape suivante dans le repli du système de traction à aile captive ;
- la [Fig.7] illustre une étape suivante dans le repli du système de traction à aile captive ;
- la [Fig.8] est une vue en perspective de l'aile de traction dans sa position de la figure 7 ;
- la [Fig.9] est une vue schématique de détail de la ligne volante et de la ligne guide du dispositif de traction à aile captive des figures 1 à 8 ;
- la [Fig.10] illustre le fonctionnement des éléments représentés figure 9 ;
- la [Fig.11] est une vue similaire à la figure 9 pour un deuxième mode de réalisation du système de traction à aile captive ;
- la [Fig.12] est une vue schématique de profil du système de traction à aile captive selon le deuxième mode de réalisation ;
- la [Fig.13] illustre le fonctionnement des éléments représentés à la figure 11 ;
- la [Fig.14] illustre le fonctionnement des éléments représentés à la figure 11 ;
- la [Fig.15] illustre le fonctionnement des éléments représentés à la figure 11 ;
- la [Fig.16] illustre l'aile de traction du dispositif de traction selon l'invention, en cours de repli le long du mât d'arrimage ;
- la [Fig.17] illustre une étape d'affalage le l'aile de traction du système de traction à aile captive ;
- la [Fig.18] illustre une étape d'affalage qui suit l'étape de la figure 17 ;
- la [Fig.19] est une vue agrandie de l'aile de traction montrant un dispositif de saisie qui est relié au bord d'attaque de l'aile de traction ;
- la [Fig.20] et la [Fig.21] sont des vues en perspective du dispositif de saisie ;
- la [Fig.22] est une vue de côté du dispositif de saisie ;
- la [Fig.23] est une vue partielle en perspective du dispositif de saisie ;
- la [Fig.24] est une vue en coupe de la figure 23 ;
- la [Fig.25] est similaire à la figure 24 pour une variante du dispositif de saisie ;
- la [fig. 26] illustre un exemple de réceptacle adapté à recevoir le coulisseau durant les phases de vol.

### DESCRIPTION DÉTAILLÉE

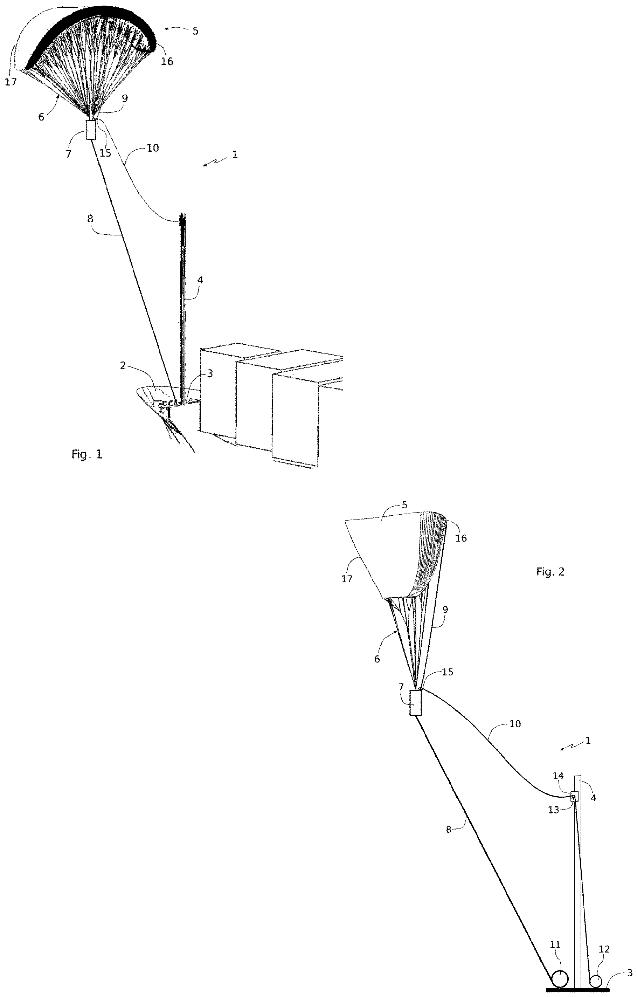

La figure 1 illustre un système de traction à aile captive 1 monté sur un navire 2 qui est, dans cet exemple, un navire de fret maritime (sur la figure 1, seul l'avant du navire a été représenté).

Dans le présent exemple, le système de traction à aile captive 1 est monté à la proue du navire 2 et est actionné comme un moyen complémentaire de propulsion du navire permettant une économie de carburant. Dans ce contexte, le système de traction à aile captive 1 est dimensionné selon le tonnage du navire à tracter et est prévu pour être déployé et replié de manière automatique.

En variante, ce système de traction à aile captive 1 peut être utilisé pour toute autre application où un tel système de traction à aile captive déployable et repliable automatiquement est souhaité, par exemple comme moyen principal de propulsion d'un navire, pour la propulsion de tout autre véhicule, pour la production d'électricité, etc.

Le système de traction à aile captive 1 comporte une plateforme de base 3 qui est ici fixée sur le pont du navire 2 et sur laquelle est monté un mât d'arrimage 4 prévu pour les opérations de déploiement et de repli automatique du système.

Le système de traction à aile captive 1 comporte de plus une aile de traction 5 qui est adaptée à générer une force de traction sous l'effet du vent. Dans le présent exemple, l'aile de traction 5 est une voile de type parapente. Tout autre équipement volant adapté à générer une force de traction sous l'effet du vent peut alternativement être employé, tels que cerfs-volants, équipements de vol à voile, voiles de type « kite » (en anglais), etc. L'aile de traction 5 comporte, de manière classique, un bord d'attaque 16 destiné à être exposé au vent incident et un bord opposé, dit bord de fuite 17.

L'aile de traction 5 est reliée par un ensemble de lignes de suspente 6 à un dispositif volant de commande de trajectoire 7 qui est adapté à agir sur les lignes de suspentes 6 pour piloter le vol de l'aile de traction 5.

Le système de traction à aile captive 1 comporte de plus une ligne de traction 8 reliant le dispositif volant de commande de trajectoire 7 à la plateforme de base 3. La force de traction générée par l'aile 5 est transmise par la ligne de traction 8 au navire 2 pour sa propulsion, et la ligne de traction est dimensionnée en conséquence. Dans le cadre de la traction d'un navire de fret maritime, la ligne de traction peut être par exemple un câble textile dont le diamètre peut atteindre plusieurs centimètres.

Le dispositif volant de commande de trajectoire 7 permet de piloter le vol de l'aile de traction 5 afin d'orienter et de positionner l'aile de traction et éventuellement d'entrainer l'aile de traction 5 à décrire des figures de vol permettant d'augmenter la force de traction sur le navire. Le contrôle de la trajectoire de l'aile de traction 5 est ici obtenu en commandant la longueur de certaines lignes de suspente mobiles, de manière classique dans le domaine des ailes volantes. L'ensemble des lignes de suspente 6 comporte en effet des lignes de suspente fixes (c'est-à-dire qui présente une longueur fixe entre leur rattachement à l'aile de traction 5 et leur rattachement au dispositif volant de commande de trajectoire 7), et des lignes de suspente mobiles dont la longueur est variable. Le dispositif volant de commande de trajectoire 7 est ainsi adapté à tirer sur certaines lignes de suspente mobiles et/ou à relâcher d'autres lignes de suspente mobiles, de sorte que le profil aérodynamique de l'aile de traction 5 est modifié en vue de contrôler sa portance, sa trajectoire, etc. La modification du profil d'une aile de traction pour la commande de sa trajectoire est réalisée de manière classique et ne sera pas décrite plus en détail ici.

Le système de traction à aile captive 1 comporte de plus une ligne guide 9 qui relie le bord d'attaque 16 de l'aile de traction 5 au dispositif volant de commande de trajectoire 7, ainsi qu'une ligne d'arrimage 10 dont l'une des extrémités est reliée à la plateforme de base 3 et dont l'autre des extrémités est raccordée de manière coulissante à la ligne guide 9. Ces deux lignes 9, 10 sont mises en œuvre lors des phases de déploiement et de repli de l'aile de traction 5.

La ligne guide 9 comporte une extrémité inférieure qui est fixée sur le dispositif volant de commande de trajectoire 7 et comporte une extrémité supérieure qui est fixée au bord d'attaque 16 de l'aile de traction 5. La fixation entre la ligne guide 9 et le bord d'attaque 16 de l'aile de traction 5 peut être réalisée par tout moyen adapté tel que la couture de la ligne guide 9 sur le bord d'attaque 16 de l'aile de traction 5. En variante, d'autres moyens de fixation, notamment des moyens de fixation modulables, peuvent être prévus pour fixer la ligne guide 9 au bord d'attaque 16 de l'aile 5 (comme dans le deuxième mode de réalisation décrit plus loin).

La figure 2 est une vue de profil du système de traction à aile captive 1 en phase de traction du navire, comme sur la figure 1. La figure 2 illustre de plus schématiquement les différents éléments constitutifs du système de traction à aile captive 1.

La ligne de traction 8 est reliée à la plateforme de base 3 par l'intermédiaire d'un treuil 11 commandé par un moteur, par exemple électrique ou hydraulique, adapté à dérouler la ligne de traction 8 pour permettre à l'aile de traction 5 de prendre de l'altitude, ou au contraire d'enrouler cette ligne de traction 8 pour ramener l'aile de traction 5 vers la plateforme de base 3.

La ligne d'arrimage 10 est également reliée à la plateforme de base 3 par l'intermédiaire d'un treuil 12 indépendant du treuil 11 de la ligne de traction 8. Les treuils 12, 11 sont cependant commandés de manière coordonnée. Cette ligne d'arrimage 10 chemine de plus par un élément de renvoi 13 monté sur le mât d'arrimage 4. Dans le présent exemple, l'élément de renvoi 13 est par exemple une poulie montée sur un charriot d'arrimage 14, ou un anneau à faible friction. Le charriot d'arrimage 14 est coulissant verticalement le long du mât d'arrimage 4, et comporte des moyens de motorisation de ce déplacement.

L'extrémité de la ligne d'arrimage 10 est reliée à la ligne guide 9 par un coulisseau 15, qui est constitué dans le présent exemple d'un anneau antifriction fixé sur l'extrémité de la ligne d'arrimage 10, et en liaison pivot glissant avec la ligne guide 9.

Les figures 1 et 2 illustrent le système de traction à aile captive 1 dans une configuration de traction, l'aile de traction 5 étant déployée et en vol, et le système participant à la propulsion du navire. Dans cette configuration, le coulisseau 15 repose sur le dispositif volant de commande de trajectoire 7, sous l'effet de son propre poids et du poids de la ligne d'arrimage 10. À cet effet, le treuil de la ligne d'arrimage 10 est commandé de manière à laisser suffisamment de mou dans la ligne d'arrimage 10 pour permettre au coulisseau 15 de se poser sur le dispositif volant de commande de trajectoire 7.

La longueur de la ligne guide 9 peut également être prévue avec un certain mou dans toutes les configurations de vol de l'aile de traction 5, pour empêcher la ligne guide 9 d'exercer, durant le vol, une traction sur le bord d'attaque 16 de l'aile de traction 5, pour ne pas perturber le vol de l'aile de traction 5. En variante, la ligne guide 9 peut également jouer le rôle de suspente et ainsi participer à la reprise d'effort de la voute créé par l'aile de traction, tout en garantissant que les efforts dus à la masse et à la trainée de la ligne d'arrimage 10 ne sont pas transmis au bord d'attaque 16 de l'aile de traction 5.

Le dispositif volant de commande trajectoire 7 est muni sur sa face supérieure (c'est-à-dire sa face tournée vers l'aile de traction 5), d'un réceptacle adapté à recevoir et maintenir le coulisseau 15 durant les phases de vol. Le réceptacle peut consister en un socle du dispositif 7 dont la forme est adaptée à maintenir en place le coulisseau 15, par exemple une surface plane de repos, une empreinte dans laquelle peut se loger le coulisseau 15, ou encore un doigt saillant du dispositif 7, que l'anneau constituant ici le coulisseau 15 vient entourer. Ce réceptacle pour le coulisseau 15 peut optionnellement comporter des moyens de verrouillage du coulisseau 15 dans ce réceptacle, durant les phases de vol.

Lorsque le treuil 11 est commandé pour relâcher de la ligne de traction 8, de sorte que l'aile de traction 5 s'éloigne de la plateforme de base 3, le treuil 12 est également commandé en conséquence pour relâcher de la ligne d'arrimage 10 de sorte que cette ligne d'arrimage 10 conserve son caractère relâché et n'interfère pas avec le vol de l'aile de traction 5. Ainsi, durant les configurations de vol, ni la ligne guide 9 ni la ligne d'arrimage 10 n'agissent sur la forme ou la trajectoire de l'aile de traction 5.

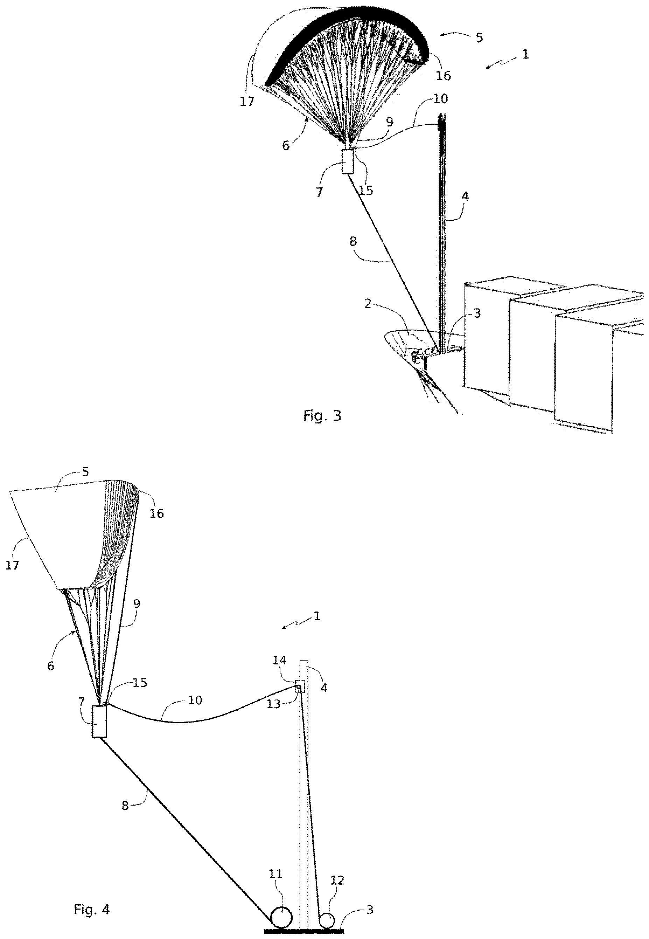

La ligne guide 9 et la ligne d'arrimage 10 interviennent cependant dans les phases de déploiement et de repli de l'aile de traction 5. Les figures 3 à 8 illustrent les étapes successives permettant le repli de l'aile de traction 5.

La figure 3 est une vue similaire à la figure 1, le système étant dans une première phase d'approche initiant le repli de l'aile de traction 5. Durant cette phase d'approche, le treuil 11 enroule la ligne de traction 8 de sorte que l'aile de traction 5 soit rapprochée de la plateforme de base 3. Le treuil 12 est simultanément actionné pour enrouler la ligne d'arrimage 10. L'aile de traction 5 parvient alors à une altitude où le dispositif volant de commande de trajectoire 7 est à une altitude proche de celle du charriot d'arrimage 14 (position illustrée figure 3 et 4).

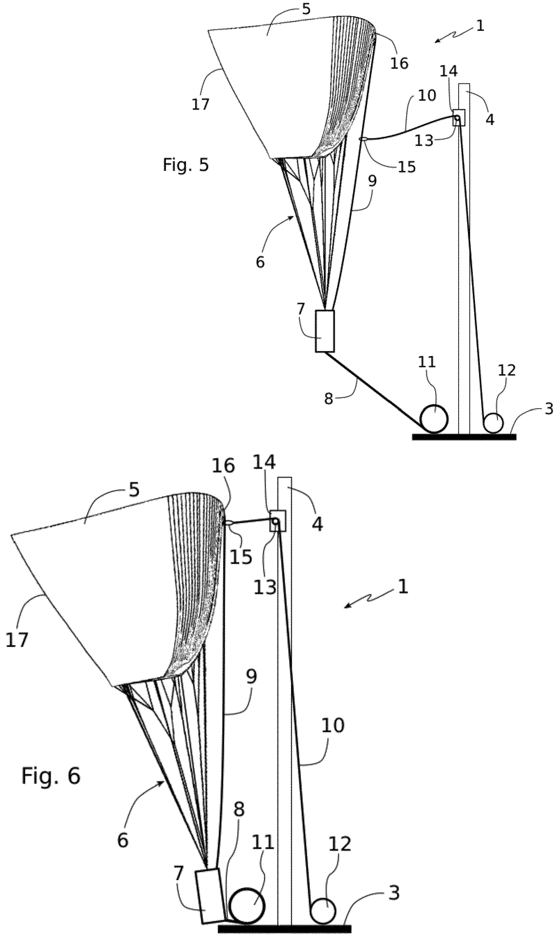

À partir de cette position, l'action des treuils 11, 12 est poursuivie et entraine l'abaissement du dispositif volant de commande de trajectoire 7 à une altitude inférieure à celle de l'élément de renvoi 13, comme représenté à la figure 5. Le coulisseau 15 remonte alors le long de la ligne guide 9, grâce au libre coulissement permit par la liaison pivot glissant. L'extrémité de la ligne d'arrimage 10 remonte ainsi le long de la ligne guide 9 au fur et à mesure du rapprochement entre l'aile de traction 5 et la plateforme de base 3, jusqu'à la position de la figure 6 dans laquelle le dispositif volant de commande de trajectoire 7 est parvenu en butée, par exemple sur un élément de support solidaire de la plateforme de base 3. La vue schématique de la figure 5 illustre simplement le dispositif volant de commande de trajectoire 7 disposé contre la plateforme de base 3 (elle-même illustrée par un simple socle) étant entendu que, en pratique, la plateforme de base peut être munie de tout réceptacle approprié pour supporter et maintenir le dispositif volant de commande de trajectoire 7 lorsqu'il est amené jusqu'à sa position de la figure 5.

La hauteur du mât d'arrimage 4 et la disposition de l'élément de renvoi 13 sont choisies pour que, dans la position de la figure 6, le coulisseau 15 soit parvenu jusqu'à l'extrémité supérieure de la ligne guide 9 et vienne en butée au niveau du bord d'attaque 16 de l'aile de traction 5.

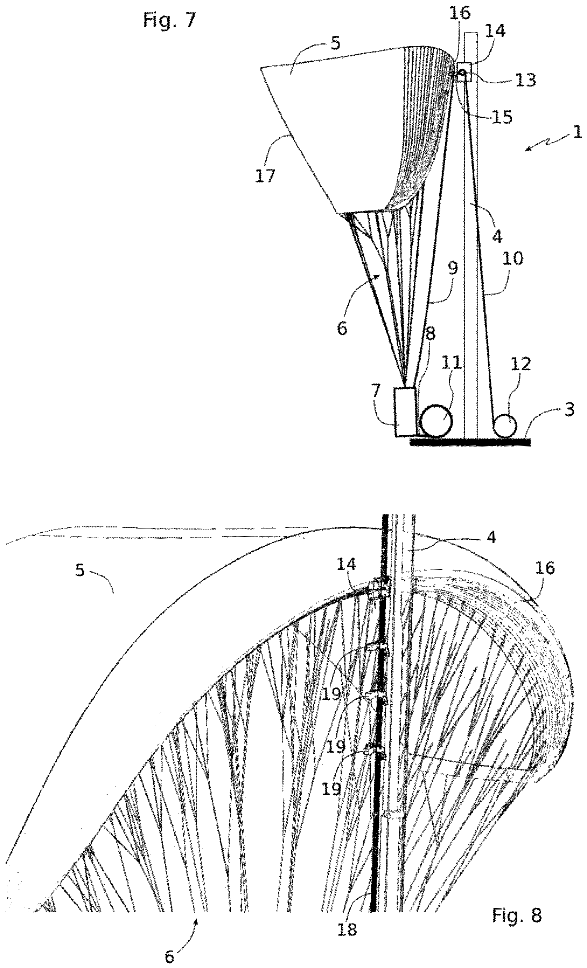

À partir de la position de la figure 6, une opération d'arrimage consiste à actionner le treuil 12 seul pour tirer la ligne d'arrimage 10, ce qui entraine un rapprochement du bord d'attaque 16 de l'aile de traction 5 jusqu'à une position d'arrimage contre le charriot d'arrimage 14, position illustrée à la figure 7.

L'aile de traction 5 est ainsi maintenue par son bord d'attaque 16 qui est arrimé au mât d'arrimage 4. Durant toutes les opérations décrites précédemment, le mât d'arrimage 4 et/ou le charriot d'arrimage 14 sont pivoté autour de l'axe longitudinal du mât d'arrimage 4, de sorte que l'aile de traction 5 soit arrimée au mât en faisant face au vent.

À partir de la position de la figure 7, où l'aile de traction 5 est arrimée face au vent, des opérations de pliage et de rangement peuvent ensuite avoir lieu.

La figure 8 est une vue de détail illustrant en perspective cette position d'arrimage qui est maintenue durant toutes les opérations de ferlage ou pliage de l'aile de traction 5. La figure 8 illustre de plus des variantes de détails de réalisation donnés en exemple. Le mât d'arrimage 4 comporte ici un rail 18 sur lequel est monté coulissant le charriot d'arrimage 14 portant l'élément de renvoi 13. D'autres charriots 19 sont également prévus sur ce rail 18, notamment des charriots permettant de replier efficacement l'aile de traction 5 en la saisissant par des lignes de pliage reliées le long de l'aile de traction 5 (non représentées). Ces charriots 19 supplémentaires sont par exemple des charriots permettant le repli de l'aile en deux le long du mât d'arrimage 4, tels que ceux décrits dans la demande de brevet WO2019239044. Toutes les opérations de pliage impliquant les charriots 19 supplémentaires, ont lieu tandis que le bord d'attaque 16 de l'aile de traction 5 est maintenu contre le mât d'arrimage 4 par la ligne d'arrimage 10 et la ligne guide 9.

Le système de traction à aile captive 1 comporte de préférence des moyens de rétention de l'extrémité de la ligne d'arrimage 10 sur la ligne guide 9. Ces moyens de rétention sont adaptés à occuper : une position libre dans laquelle l'extrémité de la ligne d'arrimage 10 coulisse librement le long de la ligne guide 9 ; et une position de retenue dans laquelle l'extrémité de la ligne d'arrimage 10 est disposée dans une boucle formée par la ligne guide 9. Ces moyens de rétention sont ici prévus pour retenir la ligne d'arrimage 10 sur la ligne guide 9 lorsque le coulisseau 15 est parvenu en butée à l'extrémité supérieure de la ligne guide 9, c'est-à-dire dans la position illustrée à la figure 6. L'opération d'arrimage qui permet de passer de la position de la figure 6 à la position de la figure 7 peut alors être mise en œuvre sans risque de glissement de la ligne d'arrimage 10 sur la ligne guide 9.

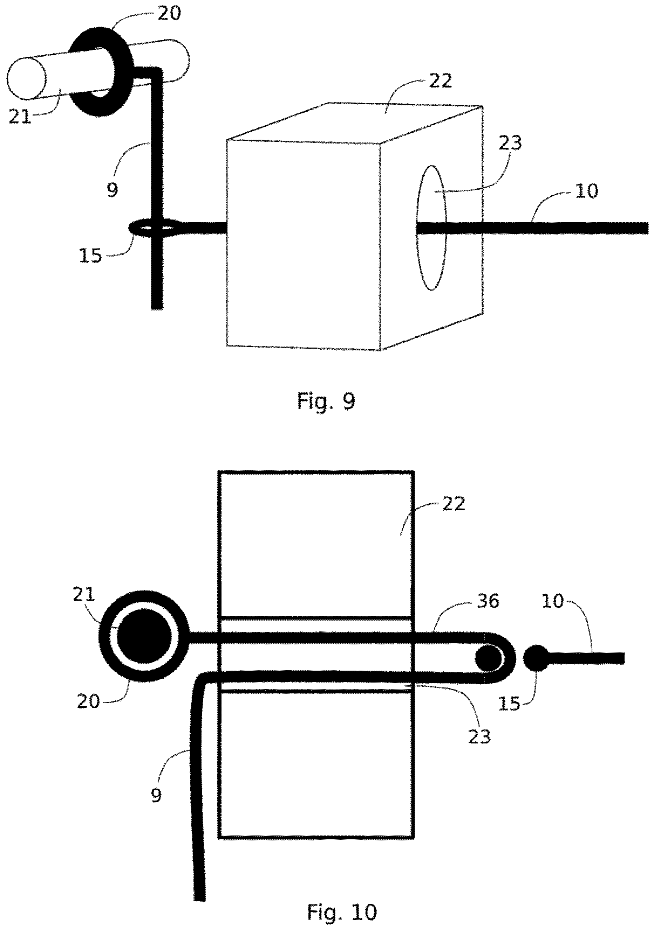

Les figures 9 et 10 illustrent un exemple de réalisation de ces moyens de rétention de l'extrémité de la ligne d'arrimage 10 sur la ligne guide 9. La figure 9 est une vue schématique en perspective illustrant l'extrémité de la ligne d'arrimage 10, munie du coulisseau 15, coopérant avec l'extrémité de la ligne guide 9 qui est située du côté de l'aile de traction 5. Dans cet exemple, la ligne guide 9 est fixée par un anneau 20 sur un barreau 21. Le barreau 21 est quant à lui solidaire du bord d'attaque 16 de l'aile de traction 5 (en étant par exemple inséré dans un logement cousu sur le bord d'attaque 16). Le charriot d'arrimage 14 comporte un organe de blocage 22 percé d'un canal traversant 23 d'un diamètre adapté au passage du coulisseau 15.

Lors de la phase d'arrimage, la traction de la ligne d'arrimage 10 finit par entrainer un passage du coulisseau 15 à travers le canal traversant 23. Le coulisseau 15 entraine avec lui la ligne guide 9 qui vient également traverser le canal traversant 23 en passant en double. L'organe de blocage permet ainsi de former une boucle de rétention 36 du coulisseau 15 et donc de la ligne d'arrimage 10.

La figure 10 est une vue schématique en coupe des éléments de la figure 9 après l'activation de ses moyens de rétention durant l'opération d'arrimage. Le coulisseau 15 a donc traversé le canal 23 et la ligne d'arrimage 10 est passée en double dans le canal 23, à travers l'organe de blocage 22, formant la boucle de rétention 36. Le mou prévu dans la ligne guide 9 est ici dimensionné pour permettre ce passage en double de la ligne guides 9 jusqu'à la configuration de la figure 10 dans laquelle la poursuite de la traction sur la ligne d'arrimage 10 entraine directement une traction sur le barreau 21, et la ligne d'arrimage 10 est ainsi verrouillée sur la ligne guide 9.

Une fois l'aile de traction 5 repliée et ferlée, celle-ci peut être stockée jusqu'à la prochaine utilisation.

Le déploiement de l'aile de traction 5 se fait ensuite par des opérations se déroulant dans l'ordre inverse par rapport aux opérations décrites précédemment, en maintenant l'aile de traction 5 face au vent.

Lors du déploiement de l'aile de traction 5, cette dernière est maintenue par son bord d'attaque 16 contre le mât d'arrimage 4, pour la déplier et la préparer pour son envol. L'aile de traction 5 est alors dans une position correspondant aux figures 7 et 8, et les moyens de rétention de la ligne d'arrimage 10 sur la ligne guide 9 sont activés.

Une fois ces opérations terminées, l'aile de traction 5 est relâchée par une opération la faisant passer de la position de la figure 7 à la position de la figure 6, en relâchant la ligne d'arrimage 10 par son treuil 12.

Dans le cas où des moyens de rétention correspondant aux figures 9 et 10 sont prévus, le relâchement de la ligne d'arrimage 10 entraine un déverrouillage par le mouvement du coulisseau 15 qui traverse à nouveau l'organe de blocage 22 en direction de la ligne guide 9. Le bord d'attaque 16 s'éloigne alors du charriot d'arrimage 14.

À partir de la position de la figure 6, l'aile de traction 5 est ensuite envoyée en vol en actionnant les treuils 11, 12 pour relâcher la ligne de traction 8 et la ligne d'arrimage 10. L'aile de traction passe ensuite par une position correspondant à la figure 5, le coulisseau 15 descendant le long de la ligne d'arrimage 10 au fur et à mesure de la montée de l'aile de traction 5.

L'aile de traction 5 atteint ensuite sa position de vol des figures 1 et 2, le coulisseau 15 venant prendre place sur son réceptacle du dispositif volant de commande de trajectoire 7.

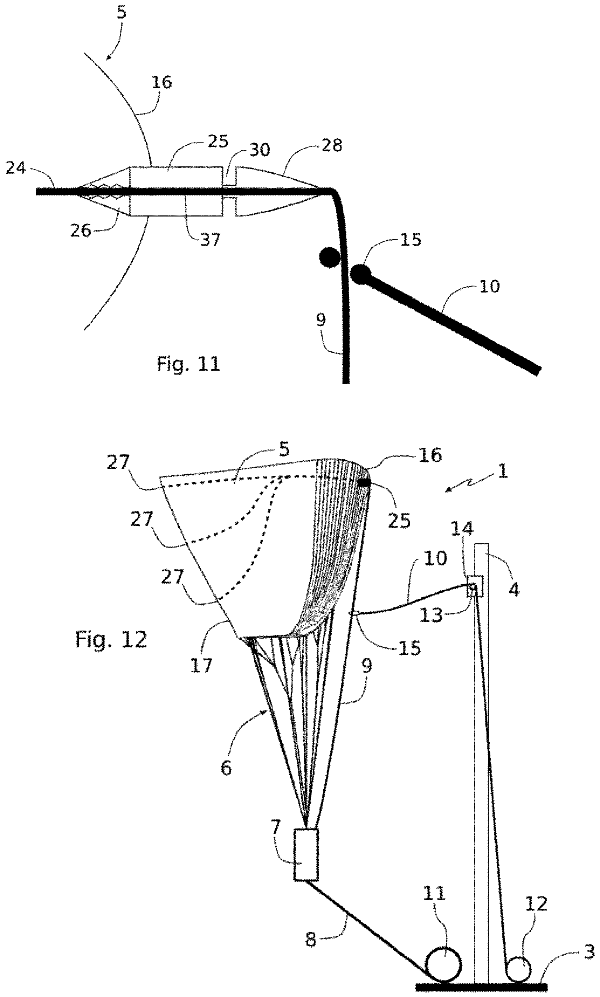

Les figures 11 à 15 illustrent un deuxième mode de réalisation dans lequel le système de traction à aile captive 1 comporte des moyens alternatifs de fixation de la ligne guide 9 sur le bord d'attaque 16 de l'aile de traction 5, ainsi que des moyens de rétention de la ligne d'arrimage 10 sur la ligne guide 9 qui sont complémentaires. Les éléments similaires du premier et du deuxième mode de réalisation portent les mêmes numéros de renvoi aux figures.

Selon ce deuxième mode de réalisation, la ligne guide 9 remplit une fonction additionnelle de commande d'une portion de ligne supplémentaire 24 qui permet d'agir sur la géométrie de l'aile de traction 5. Dans le présent exemple, la portion de ligne supplémentaire 24 prolonge la ligne guide 9 au-delà du bord d'attaque 16 de l'aile de traction 5 en pénétrant dans l'espace interne de l'aile de traction 5, ou en cheminant par-dessous ou par-dessus l'aile de traction 5.

Cette portion de ligne supplémentaire 24 peut être par exemple une ligne d'arisage permettant de réduire la portance de l'aile de traction 5, une ligne de ferlage permettant de ferler l'aile de traction 5, ou encore une ligne de rapprochement des bords de fuite 17 permettant de refermer le bord de fuite 17 par rapprochement de ses bords, durant la phase de déploiement ou de repli.

La figure 11 illustre schématiquement une construction conforme à ce deuxième mode de réalisation, en ce qui concerne l'interface entre le bord d'attaque 16, la ligne guide 9, la ligne d'arrimage 10, et la portion de ligne supplémentaire 24. La ligne guide 9 est fixée au bord d'attaque 16 de l'aile de traction 5 par l'intermédiaire d'un élément de serrage débrayable 25 qui comporte ici une mâchoire 26. L'élément de serrage débrayable 25 est fixé au bord d'attaque 16, par exemple par couture sur l'aile de traction 5, en traversant la paroi du bord d'attaque 16. L'élément de serrage débrayable 25 comporte un manchon 37, formé ici d'un alésage le traversant de part en part, et dans lequel passe la ligne guide 9.

La mâchoire 26 est serrée par des moyens élastiques sur la ligne guide 9 de sorte que la ligne guide 9 est en prise sur le bord d'attaque 16, de la même manière que dans le premier mode de réalisation. Le reste de la ligne guide 9 fonctionne de la même manière que dans le premier mode de réalisation, le coulisseau 15 coulissant le long de cette ligne guide 9 comme exposé précédemment.

La figure 12 est une vue schématique de profil du système de traction à aile captive 1, pour ce deuxième mode de réalisation. Cette figure illustre l'élément de serrage débrayable 25 fixé sur le bord d'attaque 16 et immobilisant la ligne guide 9. La portion de ligne supplémentaire 24 prolonge la ligne guide 9 au-delà du bord d'attaque 16, vers l'intérieur de l'aile de traction 5. Dans le présent exemple, la portion de ligne supplémentaire 24 est une ligne permettant la fermeture du bord de fuite 17 de l'aile de traction 5. Cette portion de ligne supplémentaire 24 se divise ainsi en plusieurs lignes dont les extrémités sont fixées en divers points 27 du bord de fuite 17, de sorte qu'une traction sur la portion de ligne supplémentaire 24 entraine une fermeture de bord de fuite 17 par rapprochement de diverses portions de ce bord de fuite 17.

Dans l'exemple de figure 12, le charriot d'arrimage 14, en plus de porter l'élément de renvoi 13, est adapté à l'accouplement avec l'élément de serrage débrayable 25. Le charriot d'arrimage 14 comporte un organe de blocage 22 dont la fonction est la même que dans le premier mode de réalisation (bloquer la ligne d'arrimage 10 sur la ligne guide 9) et qui permet ici, de plus, de bloquer l'élément de serrage débrayable 25.

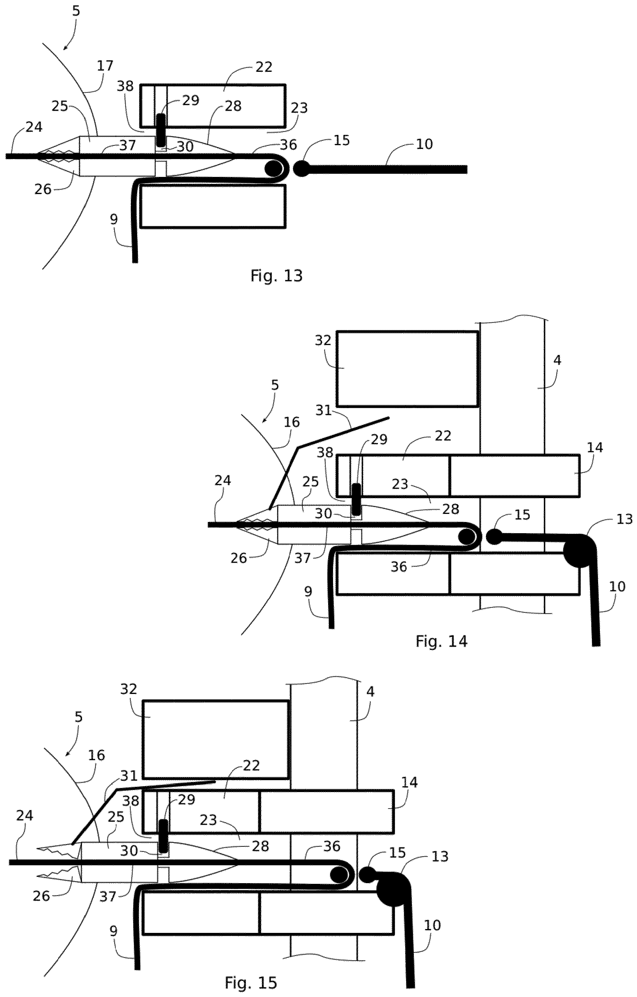

La figure 13 illustre schématiquement en coupe l'organe de blocage qui est monté sur le charriot d'arrimage 14 dans ce deuxième mode de réalisation.

À l'approche de la position correspondant à la figure 6, la traction sur la ligne d'arrimage 10 entraine, durant la phase d'arrimage, un passage en double de la ligne guide 9 à travers l'organe de blocage 22, et un accouplement de l'élément de serrage débrayable 25 dans l'organe de blocage 22. L'élément de serrage débrayable 25 prend place dans un logement 38 adapté de l'organe de blocage 22. Une extrémité effilée 28 facilite, dans cet exemple, l'entrée de l'élément de serrage débrayable 25 dans le logement 38. Un verrou 29, prévu dans ce logement 38, vient s'engager dans une gorge 30 pour bloquer en position l'élément de serrage débrayable 25. Le verrou 29 peut être piloté par tout moyen adapté, mécanique ou électromagnétique par exemple.

La figure 13 est une vue schématique de principe illustrant le fonctionnement général. En pratique, l'organe de blocage 22 et l'élément de serrage 25 pourront être constitués par toute forme accouplable prévoyant un passage, tel qu'une gorge, pour le passage en double de la ligne guide 9.

Cette position de la figure 13 est maintenue pour les mêmes opérations d'arrimage que dans le premier mode de réalisation. La traction sur la ligne d'arrimage 10 entraine une traction sur le bord d'attaque 16 et l'aile peut ainsi être maintenue par son bord d'attaque 16 contre le mât d'arrimage 4.

À partir de la position de la figure 13, ce deuxième mode de réalisation permet en outre une fonction supplémentaire illustrée aux figures 14 et 15.

Sur ces figures 14 et 15, le charriot d'arrimage 14 comporte une portion formant l'organe de blocage 22 et une autre portion portant l'élément de renvoi 13. Dans cet exemple, les mâchoires 26 comportent un moyen d'actionnement illustré ici par un levier 31 qui permet une ouverture des mâchoires 26. Le levier 31 est actionné par le rapprochement d'un autre charriot 32, également coulissant sur le mât d'arrimage 4. En variante, les mâchoires 26 peuvent être ouvertes par tout autre moyen adapté, tel que des moyens électromécaniques pilotés à distance.

Ainsi, à partir de la position d'arrimage de la figure 13, une étape de débrayage de l'élément de serrage débrayable 25 consiste à ouvrir les mâchoires 26 par l'actionnement du levier 31. L'élément de serrage débrayable 25 libère ainsi la ligne guide 9 (position de la figure 15). La traction de la ligne d'arrimage 10 peut ensuite être poursuivie, par l'actionnement du treuil 12, ce qui entraine une traction sur la ligne guide 9. La traction sur la ligne guide 9 entraine une traction sur la portion de ligne supplémentaire 24 qui est donc tirée en direction de l'élément de renvoi 13, compte tenue de l'ouverture des mâchoires 26.

Les figures 14 et 15 rendent compte de la traction sur la portion de ligne supplémentaire 24 par le déplacement du coulisseau 15 en direction de l'élément de renvoi 13. Ces vues schématiques illustrent une faible amplitude de déplacement du coulisseau 15, étant entendu que le dispositif sera en pratique adapté à une amplitude conforme à la longueur de traction souhaitée pour la portion de ligne supplémentaire 24, notamment par le choix de la position de l'élément de renvoi 13, la capacité du coulisseau 15 à passer au-delà de l'élément de renvoi 13, ou tout autre agencement.

La traction de la ligne d'arrimage 10 par son treuil 12, et donc la traction sur la portion de ligne supplémentaire 24 se poursuit autant que nécessaire pour que la portion de ligne supplémentaire 24 remplisse sa fonction.

La figure 15 illustre à cet égard l'aile de traction 5 dans une position d'arrimage, maintenue contre le mât d'arrimage 4 par son bord d'attaque 16, et repliée de part et d'autre du mât d'arrimage 4 grâce aux différents charriots supplémentaires 19 qui retiennent différentes lignes de suspentes 6 ou différentes lignes de pliage dédiées. Dans cette configuration, qui a lieu au repli ou au déploiement de l'aile de traction 5, la traction de la portion de ligne supplémentaire 24 permet de remplir sa fonction de rapprochement des bords de fuite 17 de l'aile de traction 5 (illustrée par les flèches 34). La portion de ligne supplémentaire 24 peut, en variante, remplir toute autre fonction, par exemple une fonction de ferlage de l'aile de traction 5 (illustrée par les flèches 33).

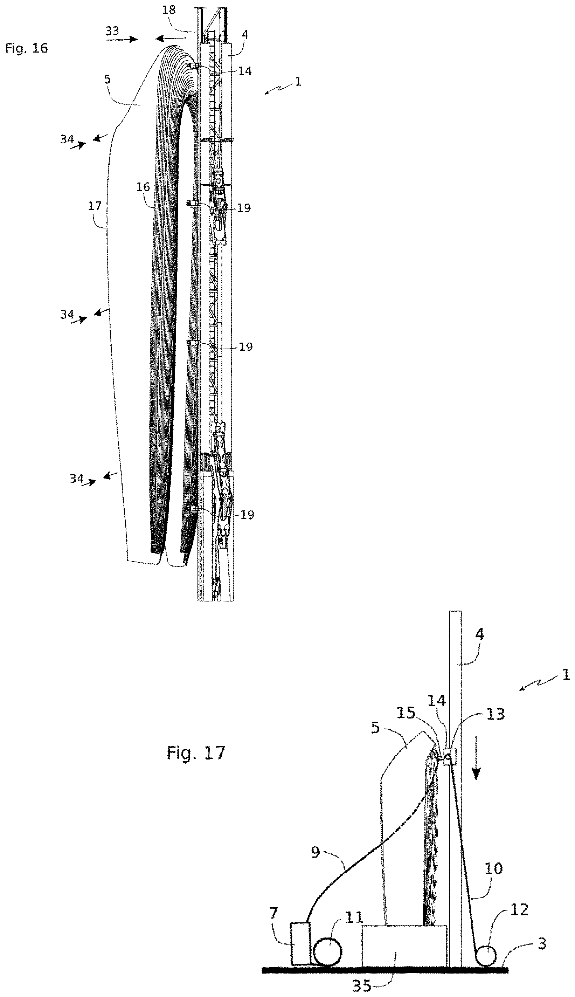

Lors du déploiement de l'aile de traction 5, à partir de la figure 16, la ligne d'arrimage 10 est d'abord relâchée grâce par le treuil 12 tandis que les mâchoires 26 sont commandés en ouverture de sorte que la portion de ligne supplémentaire 24 soit relâchée et que l'aile de traction 5 prenne sa forme de vol, l'aile de traction 5 est ensuite dépliée au moyen des charriots supplémentaires 19 tandis que l'aile de traction 5 reste maintenue contre le mât d'arrimage 4 grâce au maintien de la tension sur la ligne d'arrimage 10. Les mâchoires 26 sont refermées, la portion de ligne supplémentaire 24 ayant terminé sa tâche.

La ligne d'arrimage 10 est ensuite relâchée pour que l'aile de traction 5 prenne son envol comme décrit pour le premier mode de réalisation.

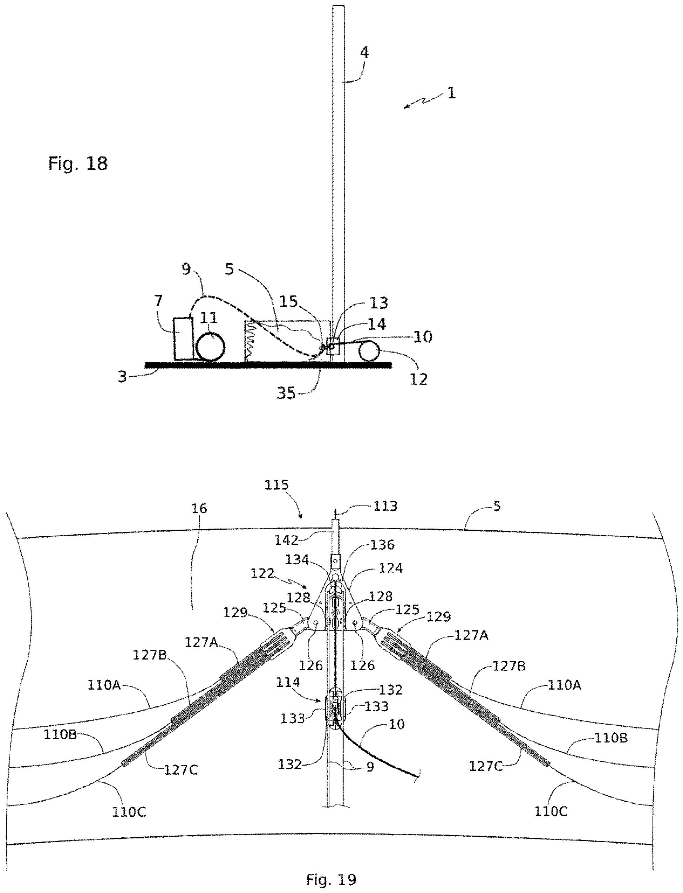

Par ailleurs, pour tous les modes de réalisation, le système de traction à aile captive 1 bénéficie d'une simplification des opérations d'affalage (concluant le repli de l'aile de traction 5), ou des opérations de hissage (initiant le déploiement de l'aile de traction 5). Ces opérations sont illustrées aux figures 17 et 18 (les lignes de suspente n'ont pas été représentées sur ces figures pour les alléger).

La figure 17 illustre l'affalage de l'aile de traction à partir de sa position de la figure 16. L'aile de traction 5 est toute entière descendue le long du mât d'arrimage 4 pour venir se stocker dans un logement 35 adapté. Cette opération est réalisée en faisant coulisser le charriot d'arrimage 14 vers le bas le long du mât d'arrimage 4 tout en maintenant l'aile de traction 5 dans sa position arrimée. Ce maintien est ici réalisé en enroulant au fur et à mesure le treuil 12 de sorte à maintenir la tension dans la ligne d'arrimage et donc à maintenir le bord d'attaque 16 contre le charriot d'arrimage 14. Le charriot d'arrimage 14 peut être lui-même motorisé et piloter sa descente le long du mât d'arrimage 4, le treuil 12 accompagnant alors sa descente. En variante, la descente peut être uniquement commandée par l'enroulement du treuil 12.

L'affalage de l'aile de traction 5 se termine dans la position de la figure 18 (où le logement 35 est vu en transparence). L'aile de traction 5 est entièrement disposée dans le logement 35, le treuil 12 maintenant cependant, jusqu'à cette position-là, la tension sur la ligne d'arrimage 10.

Pour l'opération inverse, lors du déploiement de l'aile de traction 5, à partir de la position de la figure 18, le charriot d'arrimage 14 est d'abord hissé le long du mât d'arrimage 4 tandis que le treuil 12 déroule la ligne d'arrimage 10 pour accompagner la montée du charriot d'arrimage 14, tout en maintenant une force de traction sur la ligne d'arrimage 10 de sorte que l'arrimage du bord d'attaque 16 est constamment maintenu avec le charriot d'arrimage 14 durant toute l'opération de hissage de l'aile de traction 5.

Les figures 19 à 25 sont relatives à un mode de réalisation dans lequel l'aile de traction comporte un dispositif de saisie 122. Dans ce mode de réalisation, la ligne guide 9 est une ligne double, et l'aile de traction 5 comporte plusieurs lignes de pliage 110A,110B,110C qui sont toutes solidaires du bord d'attaque 16, par au moins l'une de leurs extrémités.

L'aile de traction 5 comporte de plus une ligne de ferlage 113 dont les extrémités sont reliées au bord de fuite 17 de l'aile 5. Cette ligne de ferlage 113 peut être saisie au niveau du dispositif de saisie 122, et une traction sur cette ligne de ferlage 113 entraine le ferlage par compression de l'aile 5 dans le but de la ranger.

Le système de traction 1 comporte des charriots de pliage (tels que les charriots supplémentaires 19 de la figure 8). Ces charriots sont fixés de manière coulissante sur le mât d'arrimage 4 et comportent chacun une motorisation de sorte que la position de chaque charriot le long du mât d'arrimage 4 peut être pilotée. Ces charriots sont prévus pour saisir et guider les lignes de pliage 110A, 110B, 110C et la ligne de ferlage 113 durant les phases de déploiement ou de repli.

Les lignes de pliage 110A, 110B, 110C sont agencées par paire comme illustré à la figure 19.

La figure 19 est une vue de détail illustrant l'aile de traction 5 vue de face et montrant la zone médiane 115 de son bord d'attaque 16.

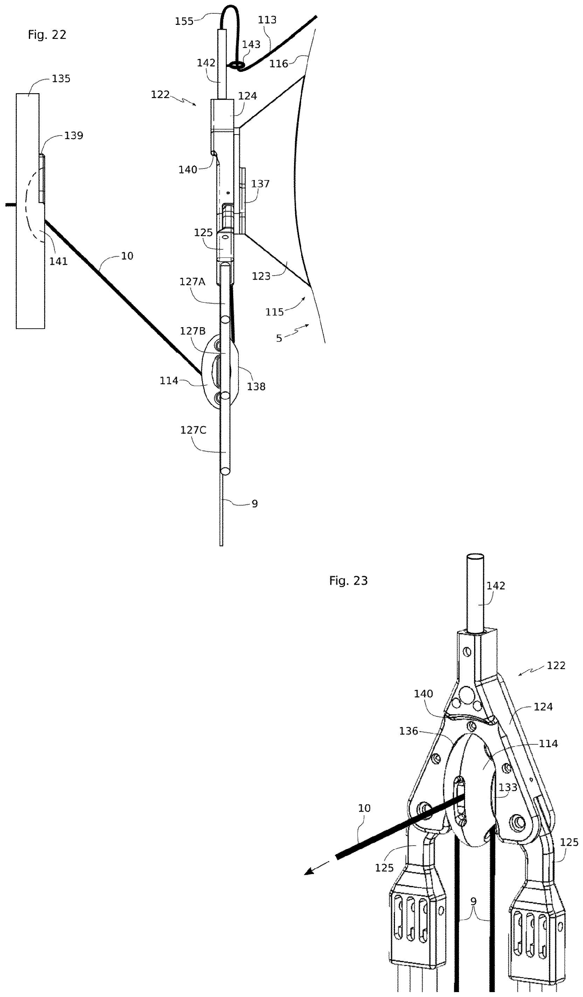

Le système comporte ici un dispositif de saisie 122 qui est relié au bord d'attaque 16 de l'aile de traction 5, au niveau de la zone médiane 115, par un pylône 123 (visible notamment sur la vue de côté de la figure 22). Le pylône 123 est ainsi dénommé par analogie avec le pylône d'un avion, c'est-à-dire le mât réacteur, en termes aéronautiques. Le pylône 123 est de préférence réalisé par une nervure de matériau léger et résistant tel qu'un matériau composite à fibres de carbone. Le pylône 123 est fixé sur le dispositif de saisie 122 et sur un renfort cousu sur le bord d'attaque 16 de l'aile de traction 5.

Le dispositif de saisie 122 peut, en variante, être relié par tout autre moyen, souple ou rigide, au bord d'attaque 16, tel que des liens textiles ou tout autre élément permettant de faire en sorte qu'une traction sur le dispositif de saisie 122 entraine une traction sur le bord d'attaque 16.

Le dispositif de saisie 122 comporte un corps 124 et deux bras d'accrochage 125, montés pivotant sur ce corps 124, chacun autour d'un axe 126. Chacun des bras d'accrochage 125 comporte une première tige d'accrochage 127A, une deuxième tige d'accrochage 127B de longueur supérieure, et une troisième tige d'accrochage 127C de longueur encore supérieure (les tiges d'accrochage 127A, 127B, 127C sont vues en coupe sur la figure 19). Cette disposition dans laquelle les tiges d'accrochage juxtaposées présentent une longueur qui va croissante, ou décroissante, est ici dénommée « en escalier ».

Dans le présent exemple, les tiges d'accrochage 127A, 127B, 127C sont constituées par des tubes emmanchés en force dans des alésages prévus à cet effet du bras d'accrochage 125.

Les bras d'accrochage sont mobiles par rapport au corps 124, entre une position de vol (celle de la figure 19) et une position d'accrochage (celle de la figure 23) dans laquelle les tiges d'accrochage 127A, 127B, 127C sont disposées sensiblement verticalement (lorsque l'aile de traction 5 est dans sa position normale d'arrimage).

Chaque bras d'accrochage 125 comporte de plus un levier 128, c'est-à-dire une portion s'étendant au-delà de l'axe 126 et permettant d'agir sur le bras d'accrochage 125 pour le replier.

Chaque ligne de pliage 110A, 110B, 110D, 110C qui rejoint la zone médiane 115 est reliée à une tige d'accrochage 127A, 127B, 127C de sorte à être saillante dans le prolongement de cette tige d'accrochage. Autrement dit, l'extrémité de la tige d'accrochage se prolonge par la ligne de pliage.

Dans le présent exemple, où les tiges d'accrochage sont réalisées par des tubes, la ligne de pliage est avantageusement insérée dans le tube, traverse tout le tube, jusqu'à une zone de fixation 129 du bras d'accrochage 125.

La liaison pivot entre les bras d'accrochage 125 et le corps 124 permet au bras d'accrochage 125 de prendre naturellement la position d'écartement illustrée à la figure 19 durant le vol de l'aile de traction 5, les bras d'accrochage 125 suivant ainsi l'ouverture dictée par les lignes de pliage 110A, 110B, 110C qui s'étendent en direction de leur autre extrémité reliée plus loin sur le bord d'attaque 16. Le dispositif de saisie 122 peut, en supplément, comporter un élément élastique (ressort ou autre) sollicitant les bras d'accrochage 125 vers leur position de vol de la figure 19.

Cette position de vol des bras d'accrochage 125 a pour fonction de sécuriser encore l'accrochage automatique des lignes, en limitant les risques d'emmêlement des bras d'accrochage 125 et des tiges d'accrochage 127A, 127B, 127C avec les autres lignes telles que la ligne guide 9 et la ligne d'arrimage 10.

Dans ce mode de réalisation, le coulisseau 15 comporte une navette 114 (également représentée en coupe sur la figure 19). La navette 114 comporte deux orifices de coulissement 132, et est ici de forme oblongue avec deux méplats latéraux 133. La forme oblongue de la navette 114 permet un guidage et une orientation angulaire (autour d'un axe horizontal) du dispositif de saisie 122.

La ligne guide 9 est ici constituée par une paire de lignes tendues entre le corps 124 et le dispositif volant de commande de trajectoire 7. Dans le présent exemple, la paire de lignes guides 9 forme une boucle autour d'une butée 134 du corps 124.

La ligne guide 9 est ainsi rattachée à zone médiane 115 par l'intermédiaire du dispositif de saisie 122.

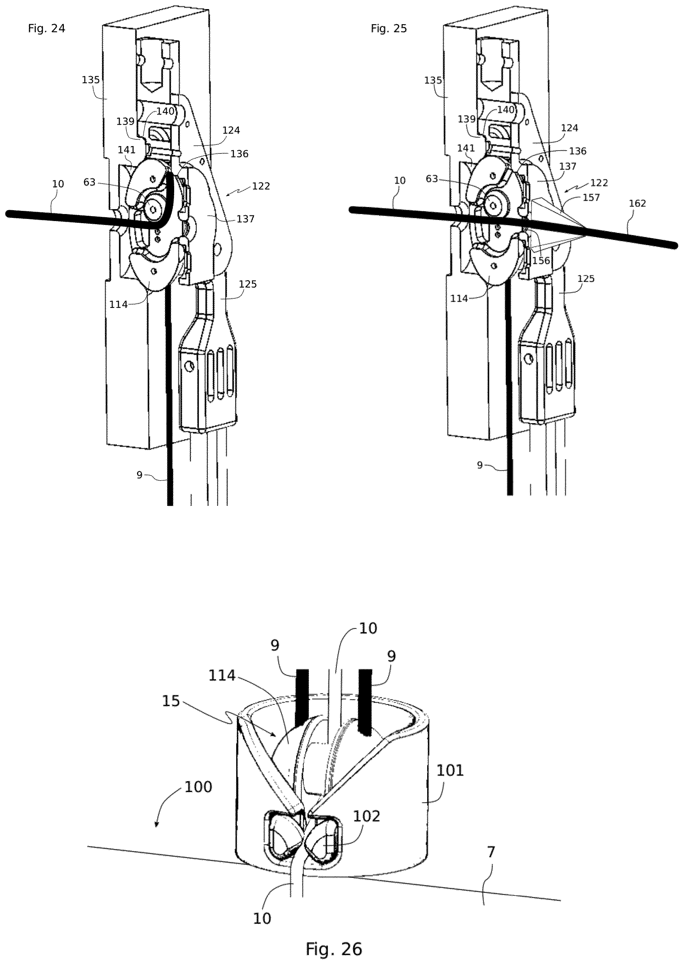

La ligne d'arrimage 10 passe à travers la navette 114 et est reliée au corps 124. La navette 114 comporte un moyen de guidage traversé par la ligne d'arrimage 10 et permettant le libre coulissement de la ligne d'arrimage 10. Dans le présent exemple, ce moyen de guidage est réalisé par un réa 63 (voir figure 24) et peut être réalisé en variante par tout type de moyen de guidage, tels que poulies ou éléments à faible friction. La ligne d'arrimage 10 s'étend ainsi en provenance du charriot d'arrimage 14, traverse la navette 114 de manière coulissante, en étant guidée en direction du corps 124.

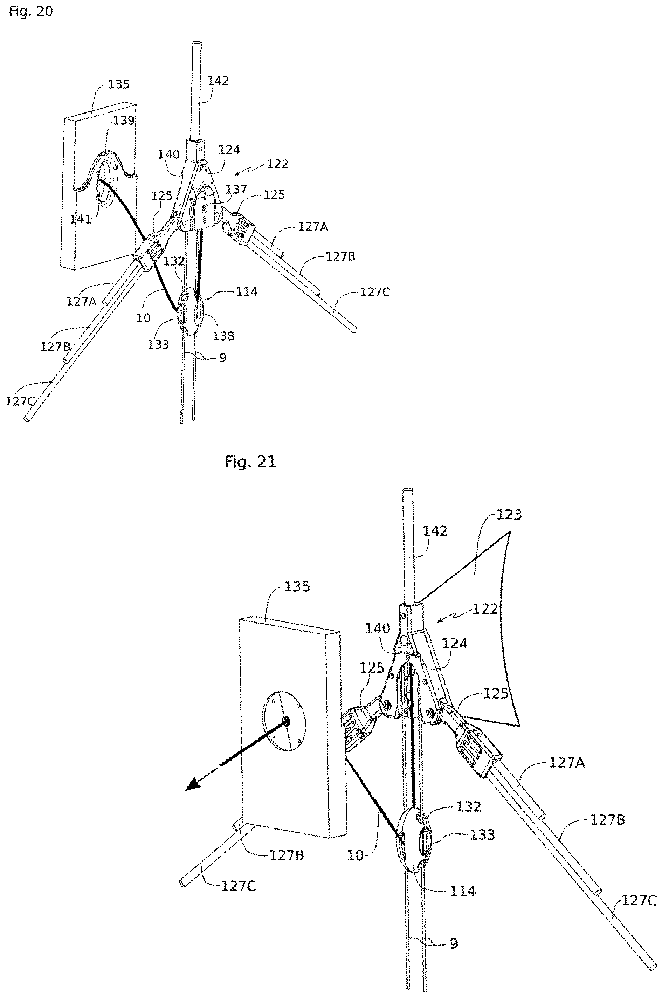

Les figures 20 et 21 illustrent le dispositif de saisie 122 en perspective selon deux angles de vue différents. Sur la figure 20, la face du dispositif de saisie 122 qui est visible est celle qui est tournée vers l'aile de traction 5 (le pylône 123 n'ayant pas été représentée).

Sur la figure 21, la face visible du dispositif de saisie 122 est celle qui est tournée vers le charriot d'arrimage 14.

Le dispositif de saisie 122 est représenté en vis-à-vis d'une interface d'emboitement 135 qui est fixée sur le charriot d'arrimage 14 (le reste du charriot d'arrimage 14 n'a pas été représenté).

La position des figures 20 et 21 illustre une position intermédiaire de l'opération d'arrimage de l'aile de traction 5 lors de son procédé de repli. Dans cette position, la ligne de traction 8 a ramené l'aile de traction 5 de sorte que son bord d'attaque 16 soit en vis-à-vis du charriot d'arrimage 14, et la ligne d'arrimage 10 est en cours d'enroulage par son treuil 12, une traction s'exerçant alors sur la ligne d'arrimage 10.

Cette opération entraine une remontée de la navette 114 le long de la ligne guide 9. Le doublement de la ligne guide 9 permet ici un coulissement de la navette 114 sans pivotement autour d'un axe vertical. Une liaison glissière est ainsi assurée, au lieu d'une liaison pivot glissant.

Le dispositif de saisie 122 comporte, au niveau du corps 124, un logement 136 destiné à recevoir la navette 114. Le logement 136 est délimité par des parois latérales coopérant avec les deux méplats 133 de la navette 114, et par une paroi de fond 137 coopérant elle-même avec un autre méplat 138 de la navette 114.

La figure 22 illustre les pièces des figures 20 et 21, vues de profil. L'interface d'emboitement 135 comporte des éléments permettant l'arrimage du dispositif de saisie 122 dans une position prédéfinie. Dans le présent exemple, ces éléments comportent un décrochement 139 qui est complémentaire d'un décrochement 140 du corps 124. La navette 114 fait également partie de ces éléments de positionnement, car elle est prévue pour s'engager dans une empreinte 141 de l'interface d'emboitement 135. Le décrochement 140 présente de plus un important avantage en matière de reprise d'efforts, car la coopération des décrochements 139 et 140 permet de reprendre l'ensemble des efforts verticaux qui vont s'exercer sur le dispositif de saisie 122 lors des opérations de pliage, ces efforts pouvant être supérieurs à 15 kN.

L'empreinte 141 comporte des parois internes permettant de recevoir et de positionner la navette 114. La forme ovoïde de la navette 114, et son complément dans la forme de l'empreinte 141, garantissent le positionnement prédéfini, lors de l'arrimage du dispositif de saisie 122 sur l'interface d'emboitement 135.

La figure 22 illustre également l'agencement de la ligne de ferlage 113. Le dispositif de saisie 122 comporte une tige de ferlage 142 saillante verticalement par le dessus du corps 124. La ligne de ferlage 113 est saillante dans le prolongement de la tige de ferlage 124. Dans le présent exemple, la tige de ferlage 142 est réalisée par un tube emmanché dans le corps 124, la ligne de ferlage passant dans ce tube et son extrémité étant fixée sur le corps 124.

Entre son rattachement à la tige de ferlage 142 et son parcours en direction du bord de fuite 17, la ligne de ferlage 113 forme une boucle 155 et passe dans un anneau 143 qui est solidaire du tube 142. L'anneau 143 est par exemple un anneau à faible friction, ou peut être réalisé par un tube ou une poulie. Une traction sur la boucle 55 entraine ainsi une traction sur la ligne de ferlage 113 et donc le ferlage de l'aile de traction 5.

Par ailleurs, la traction sur la ligne d'arrimage 10, durant la phase d'arrimage de l'aile de traction 5, provoque la remontée de la navette 114 et se conclut par l'entrée de la navette 114 dans le logement 136, comme illustré à la figure 23. La navette 114 est alors immobilisée dans le logement 136, grâce à l'ajustement dimensionnel permettant l'appui plan sur plan des méplats 133, 138 contre des surfaces internes du logement 136.

La navette 114 est ainsi mobile entre une configuration de coulissement dans laquelle elle coulisse le long de la ligne guide 9, et une configuration d'arrimage dans laquelle la navette 114 est disposée dans son logement 136.

L'entrée de la navette 114 dans le logement 136 active de plus les leviers 128, ce qui entraine la fermeture des bras d'accrochage 125, c'est-à-dire leur passage en position verticale, et leur maintien dans cette position par la présence de la navette 114.

Lorsque le dispositif de saisie 122 et la navette 114 sont dans la position de la figure 23, la poursuite de la traction sur la ligne d'arrimage 10 entraine le rapprochement du dispositif de saisie 122 vers l'interface d'emboitement 135, jusqu'à l'accouplement de ces deux éléments.

L'accouplement du dispositif de saisie 122 et de l'interface d'emboitement 135 se fait dans la position prédéterminée requise par l'emboitement des décrochements 139, 140, et par l'emboitement de la navette 114 dans l'empreinte 141. La forme ovoïde de la navette 114 permet, lors de l'arrimage, de ramener le dispositif de saisie 122 vers cette position prédéterminée, même en cas de torsion de la ligne d'arrimage 10, c'est-à-dire même en cas de rotation du dispositif de saisie 122 autour de la ligne d'arrimage 10. La forme convexe de la navette 114 est ainsi adaptée à être logée dans une forme concave de l'interface d'emboitement 135, lorsque la navette 114 est en configuration d'arrimage, la navette 114 entrainant si besoin la rotation de l'ensemble formé du dispositif de saisie 122 et de la navette 114, grâce à la forme ovoïde de la navette 114, sous la traction de la ligne d'arrimage 10.

La figure 24 est une vue en coupe du dispositif de saisie 122 (et de la navette 114) après son accouplement avec l'interface d'emboitement 135. Dans cette position, le bord d'attaque 16 de l'aile de traction 5 est arrimé au charriot d'arrimage 14 par l'intermédiaire du dispositif de saisie 122. Le maintien d'une force de traction sur la ligne d'arrimage 10 n'entraine plus le déplacement du dispositif de saisie 122 (qui est en butée contre l'interface d'emboitement) mais maintient l'arrimage.

Le système comporte de plus des moyens d'immobilisation (non représentés) mobiles entre une position rétractée, dans laquelle ils sont à l'écart du dispositif de saisie 122, et une position d'immobilisation dans laquelle ils bloquent le dispositif de saisie 122 contre l'interface d'emboitement 135.

Durant le procédé de repli de l'aile de traction 5, dès lors que le dispositif de saisie 122 est accouplé à l'interface d'emboitement 135, les moyens d'immobilisation sont activés vers leur position d'immobilisation pour fixer le dispositif de saisie 122 sur l'interface d'emboitement 135. À partir de cette étape, la traction de la ligne d'arrimage 10 n'est plus nécessaire pour maintenir l'arrimage.

Une variante visant l'agencement de la ligne d'arrimage 10 va maintenant être décrite en référence à la figure 25. Selon cette variante, la ligne d'arrimage 10 n'est pas rattachée de manière permanente au corps 124 et permet d'assurer une fonction supplémentaire.

La figure 25 correspond, pour cette variante, à la figure 24 décrite précédemment. La ligne d'arrimage 10 traverse un orifice 156 pratiqué dans la paroi de fond 137 du corps 124 et se prolonge par une portion supplémentaire 162 en direction de l'aile de traction 5. À sa sortie de l'orifice 156, la ligne d'arrimage 10 est fixée par un moyen de serrage qui comporte ici des mâchoires 157 maintenues fermées par des éléments élastiques.

Le dispositif de saisie 122 comporte ainsi un moyen de serrage adapté à occuper une position de serrage dans laquelle la ligne d'arrimage 10 et maintenue fixe sur le dispositif de saisie 122, et adapté à occuper une position de relâchement dans laquelle la ligne d'arrimage 10 coulisse librement par rapport au dispositif de saisie 10.

Le prolongement de la ligne d'arrimage 10 au-delà des mâchoires 157 permet à cette portion supplémentaire 162 de la ligne d'arrimage 10 de réaliser une fonction supplémentaire au sein de l'aile de traction 5. Cette fonction peut par exemple être relative à une action sur le profil aérodynamique de l'aile de traction 5, ou relative à une action de fermeture du bord de fuite de l'aile de traction 5.

Cette fonction supplémentaire est réalisée en commandant l'ouverture des mâchoires 157 et en exerçant une traction sur la ligne d'arrimage 10, ce qui entraine une traction sur cette portion supplémentaire 162 de la ligne de traction 10 et donc la réalisation de cette fonction supplémentaire, par exemple par une traction modifiant la forme du bord de fuite 17.

Les mâchoires 157 sont commandées en ouverture après que le dispositif de saisie 122 ait été immobilisé de sorte que la traction sur la ligne d'arrimage 10 ne soit plus utile pour maintenir l'arrimage.

La figure 26 illustre un exemple de réceptacle adapté à recevoir le coulisseau 15 durant les phases de vol. Ce réceptacle 101 est fixé sur la face supérieure 100 du dispositif volant de commande de trajectoire 7. Le réceptacle 101 est ici formé d'un logement cylindrique adapté à la forme du coulisseau 15, qui comporte dans le présent exemple une navette 114 similaire à celle du mode de réalisation précédent, avec une ligne guide 9 double. Durant le déploiement de l'aile de traction 5, lorsque le coulisseau 15 parvient au bout de sa course de coulissement le long de la ligne guide 9, en direction du dispositif 7, il vient prendre place dans le réceptacle 101.

Par ailleurs, des moyens de verrouillage sont prévus pour immobiliser la ligne d'arrimage 10 et le coulisseau 15 dans le réceptacle 101. Dans le présent exemple, ces moyens sont passifs et sont constitués d'un bloqueur de ligne 102 comportant des moyens élastiques rapprochant deux mâchoires. Lorsque la ligne d'arrimage 10 subit une traction vers le bas, même légère (due à son propre poids par exemple), elle vient se bloquer dans le bloqueur 102. Inversement, lorsque l'aile de traction est en phase de repli, la ligne d'arrimage 10 va subir une traction vers le haut (lors du rapprochement de l'aile de traction 5 du mât d'arrimage 4), ce qui provoquera l'extraction de la ligne d'arrimage 10 en dehors du bloqueur 102.

En variante, ces moyens de verrouillage peuvent être actifs, et constitués par exemple d'un actionneur commandé capable de bloquer directement le coulisseau 5 dans son réceptacle, ou la ligne d'arrimage.

Grâce au réceptacle 101, la ligne d'arrimage 10 repose entièrement, et de manière sécurisée, sur le dispositif volant de commande de trajectoire 7. Le poids et la trainée de la ligne d'arrimage 10 ne perturbent ainsi pas le bord d'attaque 16 de l'aile de traction 5 durant les phases de vol.

Des variantes de réalisation du système de traction à aile captive 1 peuvent être mises en oeuvre. Les modes de réalisation et les variantes peuvent notamment être combinés.

## Revendications

1. Système de traction à aile captive (1) comportant une aile de traction (5) adaptée à générer une force de traction sous l'effet du vent, et adaptée à être déployée et repliée par rapport à une plateforme de base (3) qui est munie d'un mât d'arrimage (4), l'aile de traction (5) présentant un bord d'attaque (16) et un bord de fuite (17), ce système de traction à aile captive comportant en outre :
- un dispositif volant de commande de trajectoire (7) rattaché à l'aile de traction (5) par des lignes de suspente (6) fixes et des lignes de suspente (6) mobiles, le dispositif volant de commande de trajectoire (7) étant adapté à commander les lignes de suspentes (6) mobiles ;
- une ligne de traction (8) reliant le dispositif volant de commande de trajectoire (7) à la plateforme de base (3) ;
ce système de traction à aile captive étant **caractérisé en ce qu'**il comporte :
- une ligne guide (9) qui relie le bord d'attaque (16) de l'aile de traction (5) au dispositif volant de commande de trajectoire (7) ;
- une ligne d'arrimage (10) dont l'une des extrémités est reliée à la plateforme de base (3), et qui est raccordée de manière coulissante à la ligne guide (9) par un coulisseau (15) fixé sur la ligne d'arrimage (10) et en liaison pivot glissant avec la ligne guide (9) ;
- un élément de renvoi (13) qui est rattaché au mât d'arrimage (4) et par lequel chemine la ligne d'arrimage (10) entre sa première extrémité et son raccordement à la ligne guide (9).

2. Système de traction à aile captive selon la revendication 1, **caractérisé en ce que** le coulisseau (15) comporte une navette (114) coulissante le long de la ligne guide (9), cette navette (114) comportant un moyen de guidage (63) traversé par la ligne d'arrimage (10).

3. Système de traction à aile captive selon la revendication 2, **caractérisé en ce que** la ligne guide (9) est constituée d'une ligne double, et **en ce que** la navette (114) est montée coulissante sur cette ligne double.

4. Système de traction à aile captive selon l'une des revendications 2 à 3, **caractérisé en ce que** le dispositif volant de commande de trajectoire (7) comporte un réceptacle (101) adapté à recevoir le coulisseau (15), ce réceptacle (101) comportant un bloqueur (102) pour la ligne d'arrimage (10).

5. Système de traction à aile captive selon l'une des revendications précédentes, **caractérisé en ce que** la ligne de traction (8) est rattachée à la plateforme de base (3) par l'intermédiaire d'un premier treuil (11) adapté à ajuster la longueur de la ligne de traction (8), et **en ce que** la ligne d'arrimage (10) est rattachée à la plateforme de base (3) par l'intermédiaire d'un deuxième treuil (12) adapté à ajuster la longueur de la ligne d'arrimage (10).

6. Système de traction à aile captive selon l'une des revendications précédentes, **caractérisé en ce que** l'élément de renvoi (13) est monté sur un charriot d'arrimage (14) coulissant le long du mât d'arrimage (4).

7. Système de traction à aile captive selon l'une des revendications précédentes, **caractérisé en ce qu'**il comporte des moyens de rétention de l'extrémité de la ligne d'arrimage (10) sur la ligne guide (9), ces moyens de rétention étant adaptés à occuper : une position libre dans laquelle l'extrémité de la ligne d'arrimage (10) coulisse librement le long de la ligne guide (9) ; et une position de retenue dans laquelle l'extrémité de la ligne d'arrimage (10) est disposée dans une boucle formée par la ligne guide (9).

8. Système de traction à aile captive selon la revendication 7, **caractérisé en ce que** lesdits moyens de rétention comportent un organe de blocage (22) qui est adapté, en position de retenue, à former sur la ligne guide (9) une boucle de rétention (36) de la ligne d'arrimage (10).

9. Système de traction à aile captive selon la revendication 8, **caractérisé en ce que** l'organe de blocage (22) comporte un canal traversant (23) dans lequel passe la ligne d'arrimage (10), lorsque les moyens de rétention sont en position libre, et dans lequel la ligne guide (9) est passée en double, lorsque les moyens de rétention sont en position verrouillée.

10. Système de traction à aile captive selon l'une des revendications précédentes, **caractérisé en ce que** la ligne guide (9) est reliée au bord d'attaque (16) de l'aile de traction (5) par un élément de serrage débrayable (25) solidaire du bord d'attaque (16) de l'aile de traction (5), cet élément de serrage débrayable (25) étant adapté à maintenir la ligne guide (9) par serrage.

11. Système de traction à aile captive selon la revendication 10, **caractérisé en ce que** l'élément de serrage débrayable (25) comporte un manchon (37) traversé par la ligne guide (9), et **en ce que** la ligne guide (9) est prolongée par une portion de ligne supplémentaire (24) s'étendant au-delà du bord d'attaque (16) de l'aile de traction (5).

12. Système de traction à aile captive selon la revendication 11, **caractérisé en ce que** la portion de ligne supplémentaire (24) est reliée au bord de fuite (17) de l'aile de traction (5).

13. Système de traction à aile captive selon l'une des revendications 10 à 12 lorsqu'elles dépendent de la revendication 8 ou 9, **caractérisé en ce que** l'organe de blocage (22) comporte un logement (38) adapté à recevoir l'élément de serrage débrayable (25).

14. Système de traction à aile captive selon la revendication 13, **caractérisé en ce que** ledit logement (38) comporte un verrou (29) de maintien de l'élément de serrage débrayable (25).

15. Système de traction à aile captive selon l'une des revendications précédentes, **caractérisé en ce qu'**il comporte :
- plusieurs lignes de pliage (110A, 110B, 110C) ayant chacune une extrémité fixée au bord d'attaque (16) de l'aile de traction (5), en étant espacées les unes des autres le long de ce bord d'attaque (16) ;
- un charriot supplémentaire (19) adapté à coulisser le long du mât d'arrimage (4) ;
- un dispositif de saisie (122) qui est rattaché au bord d'attaque (16) de l'aile de traction (5) et qui comporte un bras d'accrochage (125) muni d'une tige d'accrochage (127A,127B,127C), l'une des lignes de pliage (110A, 110B, 110C) étant saillante dans le prolongement de la tige d'accrochage (127A,127B,127C) ;
la ligne d'arrimage (10) comportant une extrémité reliée au dispositif de saisie (122).

16. Système de traction selon la revendication 15 lorsqu'elle dépend de la revendication 2 ou 3, **caractérisé en ce que** le dispositif de saisie (122) comporte un logement (136) pour la navette (114), la navette (114) étant mobile entre une configuration de coulissement dans laquelle elle coulisse le long de la ligne guide (9), et une configuration d'arrimage dans laquelle la navette (114) est disposée dans son logement (136).

17. Système de traction selon la revendication 16, **caractérisé en ce que** le dispositif de saisie (122) comporte un levier (128) de commande du pivotement du bras d'accrochage (125) vers sa position d'accrochage, ce levier (128) étant adapté à être actionné par la navette (114) lorsqu'elle rejoint sa configuration d'arrimage.

18. Système de traction selon l'une des revendications 15 à 17, lorsqu'elles dépendent de la revendication 6 9, caractérisé en ce le charriot d'arrimage (14) comporte une interface d'emboitement (135) pour le dispositif de saisie (122).

19. Système de traction selon la revendication 18, **caractérisé en ce que** le charriot d'arrimage (14) comporte des moyens d'immobilisation du dispositif de saisie (122) contre l'interface d'emboitement (135).

20. Système de traction selon la revendication 18, lorsqu'elle dépend de la revendication 16, **caractérisé en ce que** la navette (114) présente une forme convexe adaptée à être logée dans une forme concave de l'interface d'emboitement (135), lorsque la navette (114) est en configuration d'arrimage.

21. Procédé de commande d'un système de traction à aile captive conforme à la revendication 5 ou à l'une quelconque des revendications 6 à 20 lorsqu'elles dépendent de la revendication 5, **caractérisé en ce qu'**il comporte une phase de déploiement et une phase de repli de l'aile de traction (5) dans lesquelles le deuxième treuil (12) est piloté conjointement au premier treuil (11) de sorte que l'extrémité de la ligne d'arrimage (10) coulisse le long de la ligne guide (9) tandis que l'élément volant de commande de trajectoire (7) est éloigné ou rapproché de la plateforme de base (3).

22. Procédé de commande selon la revendication 21 d'un système de traction à aile captive conforme à la revendication 7 ou à l'une quelconque des revendications 8 à 20 lorsqu'elles dépendent de la revendication 7, **caractérisé en ce que** la phase de repli de l'aile de traction (5) comporte :
- une étape de verrouillage de la ligne d'arrimage (10) sur la ligne guide (9) ;
- une étape d'arrimage dans laquelle une traction sur la ligne d'arrimage (10) entraine une traction sur la ligne guide (9) et sur le bord d'attaque (16) de l'aile de traction (5).

23. Procédé de commande selon l'une des revendications 21 ou 22 d'un système de traction à aile captive conforme à la revendication 10 ou à l'une quelconque des revendications 11 à 20 lorsqu'elles dépendent de la revendication 10, **caractérisé en ce que** la phase de repli comporte :
- une étape de débrayage de l'élément de serrage débrayable (25), la ligne guide (9) étant ainsi libérée ;
- une étape de traction de la ligne d'arrimage (10) entraine une traction sur la ligne guide (9) et sur la portion de ligne supplémentaire (24).

24. Procédé de commande selon l'une quelconque des revendications 21 à 23 d'un système de traction à aile captive conforme à la revendication 6 ou à l'une quelconque des revendications 7 à 20 lorsqu'elles dépendent de la revendication 6, **caractérisé en ce que** la phase de déploiement et la phase de repli comportent des étapes de hissage ou d'affalage de l'aile de traction (5) le long du mât d'arrimage (4), étapes durant lesquelles le charriot d'arrimage (14) coulisse le long du mât d'arrimage (4) et la ligne d'arrimage (10) est maintenue en tension pour maintenir le bord d'attaque (16) de l'aile de traction (5) arrimé contre le mât d'arrimage (4).

25. Procédé de commande selon l'une quelconque des revendications 21 à 24 d'un système de traction à aile captive conforme à la revendication 4, ou à l'une des revendications 5 à 20 lorsqu'elles dépendent de la revendication 4, **caractérisé en ce qu'**il comporte une phase de vol durant laquelle le coulisseau (15) est disposé sur le réceptacle du dispositif volant de commande de trajectoire (7), et **en ce que** la longueur de la ligne d'arrimage (10) est commandée pour maintenir du mou dans la ligne d'arrimage (10).

## Patentansprüche

1. Zugsystem mit angebundenem Schirm (1), umfassend einen Zugschirm (5), der dazu angepasst ist, unter dem Einfluss des Windes eine Zugkraft zu erzeugen, und dazu angepasst ist, in Bezug auf eine Basisplattform (3), die über einen Befestigungsmast (4) verfügt, auseinandergefaltet und zusammengefaltet zu werden, wobei der Zugschirm (5) eine Anströmkante (16) und eine Abströmkante (17) aufweist, wobei dieses Zugsystem mit angebundenem Schirm ferner Folgendes umfasst:
- eine fliegende Vorrichtung zur Bahnsteuerung (7), die durch feste Hängeleinen (6) und bewegliche Hängeleinen (6) an dem Zugschirm (5) angebracht ist, wobei die fliegende Vorrichtung zur Bahnsteuerung (7) dazu angepasst ist, die beweglichen Hängeleinen (6) zu steuern;
- eine Zugleine (8), die die fliegende Vorrichtung zur Bahnsteuerung (7) mit der Basisplattform (3) verbindet;
wobei dieses Zugsystem mit angebundenem Schirm **dadurch gekennzeichnet ist, dass** es Folgendes umfasst:
- eine Führungsleine (9), die die Anströmkante (16) des Zugschirms (5) mit der fliegenden Vorrichtung zur Bahnsteuerung (7) verbindet;
- eine Befestigungsleine (10), von der eines der Enden mit der Basisplattform (3) verbunden ist und die durch ein Gleitstück (15), das an der Befestigungsleine (10) fixiert ist und mit der Führungsleine (9) in gleitender Gelenkverbindung steht, an der Führungsleine (9) angebracht ist;
- ein Umlenkelement (13), das an dem Befestigungsmast (4) angebracht ist und über das die Befestigungsleine (10) zwischen ihrem ersten Ende und ihrer Anbringung an der Führungsleine (9) verläuft.

2. Zugsystem mit angebundenem Schirm nach Anspruch 1, **dadurch gekennzeichnet, dass** das Gleitstück (15) einen Schlitten (114) umfasst, der entlang der Führungsleine (9) gleitet, wobei dieser Schlitten (114) ein Führungsmittel (63) umfasst, das von der Befestigungsleine (10) durchquert wird.

3. Zugsystem mit angebundenem Schirm nach Anspruch 2, **dadurch gekennzeichnet, dass** die Führungsleine (9) aus einer Doppelleine besteht und dass der Schlitten (114) an dieser Doppelleine gleitend montiert ist.

4. Zugsystem mit angebundenem Schirm nach einem der Ansprüche 2 bis 3, **dadurch gekennzeichnet, dass** die fliegende Vorrichtung zur Bahnsteuerung (7) einen Behälter (101) umfasst, der dazu angepasst ist, das Gleitstück (15) aufzunehmen, wobei dieser Behälter (101) ein Klemmstück (102) für die Befestigungsleine (10) umfasst.

5. Zugsystem mit angebundenem Schirm nach einem der vorhergehenden Ansprüche, **dadurch gekennzeichnet, dass** die Zugleine (8) mit Hilfe einer ersten Winde (11), die dazu angepasst ist, die Länge der Zugleine (8) anzupassen, an der Basisplattform (3) angebracht ist und dass die Befestigungsleine (10) mit Hilfe einer zweiten Winde (12), die dazu angepasst ist, die Länge der Befestigungsleine (10) anzupassen, an der Basisplattform (3) angebracht ist.

6. Zugsystem mit angebundenem Schirm nach einem der vorhergehenden Ansprüche, **dadurch gekennzeichnet, dass** das Umlenkelement (13) an einem Befestigungswagen (14) montiert ist, der entlang des Befestigungsmasts (4) gleitet.

7. Zugsystem mit angebundenem Schirm nach einem der vorhergehenden Ansprüche, **dadurch gekennzeichnet, dass** es Mittel zum Zurückhalten des Endes der Befestigungsleine (10) an der Führungsleine (9) umfasst, wobei diese Zurückhaltemittel dazu angepasst sind, Folgendes einzunehmen: eine freie Stellung, in der das Ende der Befestigungsleine (10) frei entlang der Führungsleine (9) gleitet; und eine Haltestellung, in der das Ende der Befestigungsleine (10) in einer Schleife angeordnet ist, die durch die Führungsleine (9) gebildet wird.

8. Zugsystem mit angebundenem Schirm nach Anspruch 7, **dadurch gekennzeichnet, dass** die Zurückhaltemittel ein Blockierorgan (22) umfassen, das dazu angepasst ist, in der Haltestellung an der Führungsleine (9) eine Schleife (36) zum Zurückhalten der Befestigungsleine (10) zu bilden.

9. Zugsystem mit angebundenem Schirm nach Anspruch 8, **dadurch gekennzeichnet, dass** das Blockierorgan (22) einen Durchgangskanal (23) umfasst, durch den die Befestigungsleine (10) verläuft, wenn sich die Zurückhaltemittel in der freien Stellung befinden, und durch den die Führungsleine (9) doppelt verläuft, wenn sich die Zurückhaltemittel in der verriegelten Stellung befinden.

10. Zugsystem mit angebundenem Schirm nach einem der vorhergehenden Ansprüche, **dadurch gekennzeichnet, dass** die Führungsleine (9) durch ein entkuppelbares Klemmelement (25), das mit der Anströmkante (16) des Zugschirms (5) fest verbunden ist, mit der Anströmkante (16) des Zugschirms (5) verbunden ist, wobei dieses entkuppelbare Klemmelement (25) dazu angepasst ist, die Führungsleine (9) durch Klemmen zu halten.

11. Zugsystem mit angebundenem Schirm nach Anspruch 10, **dadurch gekennzeichnet, dass** das entkuppelbare Klemmelement (25) eine Hülse (37) umfasst, die von der Führungsleine (9) durchquert wird, und dass die Führungsleine (9) durch einen zusätzlichen Leinenabschnitt (24) verlängert wird, der sich über die Anströmkante (16) des Zugschirms (5) hinaus erstreckt.

12. Zugsystem mit angebundenem Schirm nach Anspruch 11, **dadurch gekennzeichnet, dass** der zusätzliche Leinenabschnitt (24) mit der Abströmkante (17) des Zugschirms (5) verbunden ist.

13. Zugsystem mit angebundenem Schirm nach einem der Ansprüche 10 bis 12, wenn diese von Anspruch 8 oder 9 abhängen, **dadurch gekennzeichnet, dass** das Blockierorgan (22) eine Aufnahme (38) umfasst, die dazu angepasst ist, das entkuppelbare Klemmelement (25) aufzunehmen.

14. Zugsystem mit angebundenem Schirm nach Anspruch 13, **dadurch gekennzeichnet, dass** die Aufnahme (38) eine Verriegelung (29) zum Halten des entkuppelbaren Klemmelements (25) umfasst.

15. Zugsystem mit angebundenem Schirm nach einem der vorhergehenden Ansprüche, **dadurch gekennzeichnet, dass** es Folgendes umfasst:
- mehrere Faltleinen (110A, 110B, 110C), von denen jede ein Ende aufweist, das an der Anströmkante (16) des Zugschirms (5) fixiert ist, und die entlang dieser Anströmkante (16) voneinander beabstandet sind;
- einen zusätzlichen Wagen (19), der dazu angepasst ist, entlang des Befestigungsmasts (4) zu gleiten;
- eine Verankerungsvorrichtung (122), die an der Anströmkante (16) des Zugschirms (5) angebracht ist und die einen Greifarm (125) umfasst, der über eine Greifstange (127A, 127B, 127C) verfügt, wobei eine der Faltleinen (110A, 110B, 110C) in der Verlängerung der Greifstange (127A, 127B, 127C) vorsteht;
wobei die Befestigungsleine (10) ein Ende umfasst, das mit der Verankerungsvorrichtung (122) verbunden ist.

16. Zugsystem nach Anspruch 15, wenn dieser von Anspruch 2 oder 3 abhängt, **dadurch gekennzeichnet, dass** die Verankerungsvorrichtung (122) eine Aufnahme (136) für den Schlitten (114) aufweist, wobei der Schlitten (114) zwischen einer Gleitkonfiguration, in der er entlang der Führungsleine (9) gleitet, und einer Befestigungskonfiguration, in der der Schlitten (114) in seiner Aufnahme (136) angeordnet ist, beweglich ist.

17. Zugsystem nach Anspruch 16, **dadurch gekennzeichnet, dass** die Verankerungsvorrichtung (122) einen Steuerhebel (128) für das Schwenken des Greifarms (125) in seine Greifstellung umfasst, wobei dieser Hebel (128) dazu angepasst ist, durch den Schlitten (114) betätigt zu werden, wenn dieser in seine Befestigungskonfiguration fährt.

18. Zugsystem nach einem der Ansprüche 15 bis 17, wenn diese von Anspruch 6 abhängen, **dadurch gekennzeichnet, dass** der Befestigungswagen (14) eine Aufnahmeschnittstelle (135) für die Verankerungsvorrichtung (122) umfasst.

19. Zugsystem nach Anspruch 18, **dadurch gekennzeichnet, dass** der Befestigungswagen (14) Mittel zum Arretieren der Verankerungsvorrichtung (122) an der Aufnahmeschnittstelle (135) umfasst.

20. Zugsystem nach Anspruch 18, wenn dieser von Anspruch 16 abhängt, **dadurch gekennzeichnet, dass** der Schlitten (114) einen konvexe Form aufweist, die dazu angepasst ist, in einer konkaven Form der Aufnahmeschnittstelle (135) aufgenommen zu sein, wenn sich der Schlitten (114) in der Befestigungskonfiguration befindet.

21. Verfahren zur Steuerung eines Zugsystems mit angebundenem Schirm nach Anspruch 5 oder einem der Ansprüche 6 bis 20, wenn diese von Anspruch 5 abhängen, **dadurch gekennzeichnet, dass** es eine Phase des Auseinanderfaltens und eine Phase des Zusammenfaltens des Zugschirms (5) umfasst, während derer die zweite Winde (12) gemeinsam mit der ersten Winde (11) angesteuert wird, sodass das Ende der Befestigungsleine (10) entlang der Führungsleine (9) gleitet, während das fliegende Element zur Bahnsteuerung (7) von der Basisplattform (3) entfernt oder an diese angenähert wird.

22. Steuerungsverfahren nach Anspruch 21 für ein Zugsystem mit angebundenem Schirm nach Anspruch 7 oder einem der Ansprüche 8 bis 20, wenn diese von Anspruch 7 abhängen, **dadurch gekennzeichnet, dass** die Phase des Zusammenfaltens des Zugschirms (5) Folgendes umfasst:
- einen Schritt des Verriegelns der Befestigungsleine (10) an der Führungsleine (9);
- einen Schritt des Befestigens, bei dem ein Ziehen an der Befestigungsleine (10) ein Ziehen an der Führungsleine (9) und an der Anströmkante (16) des Zugschirms (5) bewirkt.

23. Steuerungsverfahren nach einem der Ansprüche 21 oder 22 für ein Zugsystem mit angebundenem Schirm nach Anspruch 10 oder einem der Ansprüche 11 bis 20, wenn diese von Anspruch 10 abhängen, **dadurch gekennzeichnet, dass** die Phase des Zusammenfaltens Folgendes umfasst:
- einen Schritt des Entkuppelns des entkuppelbaren Klemmelements (25), wobei die Führungsleine (9) auf diese Weise befreit wird;
- einen Schritt des Ziehens an der Befestigungsleine (10), der ein Ziehen an der Führungsleine (9) und an dem zusätzlichen Leinenabschnitt (24) bewirkt.

24. Steuerungsverfahren nach einem der Ansprüche 21 bis 23 für ein Zugsystem mit angebundenem Schirm nach Anspruch 6 oder einem der Ansprüche 7 bis 20, wenn diese von Anspruch 6 abhängen, **dadurch gekennzeichnet, dass** die Phase des Auseinanderfaltens und die Phase des Zusammenfaltens Schritte des Hochfahrens oder des Herunterfahrens des Zugschirms (5) entlang des Befestigungsmasts (4) umfassen, wobei während dieser Schritte der Befestigungswagen (14) entlang des Befestigungsmasts (4) gleitet und die Befestigungsleine (10) unter Spannung gehalten wird, um die Anströmkante (16) des Zugschirms (5) an dem Befestigungsmast (4) befestigt zu halten.

25. Steuerungsverfahren nach einem der Ansprüche 21 bis 24 für ein Zugsystem mit angebundenem Schirm nach Anspruch 4 oder einem der Ansprüche 5 bis 20, wenn diese von Anspruch 4 abhängen, **dadurch gekennzeichnet, dass** es eine Phase des Fliegens umfasst, während der das Gleitstück (15) an dem Behälter der fliegenden Vorrichtung zur Bahnsteuerung (7) angeordnet ist, und dass die Länge der Befestigungsleine (10) so gesteuert wird, dass die Befestigungsleine (10) locker bleibt.

## Claims

1. A captive wing traction system (1) including a traction wing (5) adapted to generate a traction force because of the effect of the wind and adapted to be deployed and folded relative to a base platform (3) that is provided with a stowage mast (4), the traction wing (5) having a leading edge (16) and a trailing edge (17), this captive wing traction system further including:
- a trajectory control flying device (7) attached to the traction wing (5) by fixed suspension lines (6) and mobile suspension lines (6), the trajectory control flying device (7) being adapted to control the mobile suspension lines (6);
- a traction line (8) connecting the trajectory control flying device (7) to the base platform (3);
this captive wing traction system being **characterized in that** it includes:
- a guide line (9) that connects the leading edge (16) of the traction wing (5) to the trajectory control flying device (7);
- a stowage line (10) one end of which is connected to the base platform (3) and that is connected in a sliding manner to the guide line (9) by a slider (15) fixed onto the stowage line (10) and with a pivoting sliding connection to the guide line (9);
- a deflector element (13) that is attached to the stowage mast (4) and through which the stowage line (10) is routed between its first end and its connection to the guide line (9).

2. The captive wing traction system as claimed in claim 1, **characterized in that** the slider (15) includes a shuttle (114) sliding along the guide line (9), this shuttle (114) including a guide means (63) through which the stowage line (10) passes.

3. The captive wing traction system as claimed in claim 2, **characterized in that** the guide line (9) consists of a double line and **in that** the shuttle (114) is slidably mounted on that double line.

4. The captive wing traction system as claimed in either one of claims 2 or 3, **characterized in that** the trajectory control flying device (7) includes a receptacle (101) adapted to receive the slider (15), this receptacle (101) including an immobilizer (102) for the stowage line (10).

5. The captive wing traction system as claimed in any one of the preceding claims, **characterized in that** the traction line (8) is attached to the base platform (3) by means of a first winch (11) adapted to adjust the length of the traction line (8) and the stowage line (10) is attached to the base platform (3) by means of a second winch (12) adapted to adjust the length of the stowage line (10).

6. The captive wing traction system as claimed in any one of the preceding claims, **characterized in that** the deflector element (13) is mounted on a stowage trolley (14) sliding along the stowage mast (4).

7. The captive wing traction system as claimed in any one of the preceding claims, **characterized in that** it includes means for retaining the end of the stowage line (10) on the guide line (9), these retaining means being adapted to occupy: a free position in which the end of the stowage line (10) slides freely along the guide line (9) and a retaining position in which the end of the stowage line (10) is disposed in a loop formed by the guide line (9).

8. The captive wing traction system as claimed in claim 7, **characterized in that** said retaining means include a blocking member (22) that is adapted, in a retaining position, to form on the guide line (9) a loop (36) for retaining the stowage line (10).

9. The captive wing traction system as claimed in claim 8, **characterized in that** the blocking member (22) includes a through-passage (23) in which the stowage line (10) is passed when the retaining means are in the free position and in which the guide line (9) is passed doubled over when the retaining means are in the locked position.

10. The captive wing traction system as claimed in any one of the preceding claims, **characterized in that** the guide line (9) is connected to the leading edge (16) of the traction wing (5) by a disengageable clamping element (25) fastened to the leading edge (16) of the traction wing (5), this disengageable clamping element (25) being adapted to retain the guide line (9) by clamping it.

11. The captive wing traction system as claimed in claim 10, **characterized in that** the disengageable clamping element (25) includes a sleeve (37) through which the guide line (9) is passed and the guide line (9) is extended by an additional line portion (24) extending beyond the leading edge (16) of the traction wing (5).

12. The captive wing traction system as claimed in claim 11, **characterized in that** the additional line portion (24) is connected to the trailing edge (17) of the traction wing (5).

13. The captive wing traction system as claimed in any one of claims 10 to 12 when dependent on claim 8 or 9, **characterized in that** the blocking member (22) includes a housing (38) adapted to receive the disengageable clamping element (25).

14. The captive wing traction system as claimed in claim 13, **characterized in that** said housing (38) includes a latch (29) for retaining the disengageable clamping element (25).

15. The captive wing traction system as claimed in any one of the preceding claims, **characterized in that** it includes:
- a plurality of folding lines (110A, 110B, 110C) each having an end fixed to the leading edge (16) of the traction wing (5) and being spaced from one another along that leading edge (16);
- an additional trolley (19) adapted to slide along the stowage mast (4);
- a capture device (122) that is attached to the leading edge (16) of the traction wing (5) and includes an attachment arm (125) provided with an attachment rod (127A,127B,127C), one of the folding lines (110A, 110B, 110C) projecting in line with the attachment rod (127A,127B,127C);
the stowage line (10) having one end connected to the capture device (122).

16. The traction system as claimed in claim 15 when dependent on claim 2 or 3, **characterized in that** the capture device (122) includes a housing (136) for the shuttle (114), the shuttle (114) being mobile between a sliding configuration in which it slides along the guide line (9) and a stowage configuration in which the shuttle (114) is disposed in its housing (136).

17. The traction system as claimed in claim 16, **characterized in that** the capture device (122) includes a lever (128) controlling pivoting of the attachment arm (125) toward its attachment position, this lever (128) being adapted to be actuated by the shuttle (114) when it returns to its stowage configuration.

18. The traction system as claimed in any one of claims 15 to 17 when dependent on claim 6, **characterized in that** the stowage trolley (14) includes a nesting interface (135) for the capture device (122).

19. The traction system as claimed in claim 18, **characterized in that** the stowage trolley (14) includes means for immobilizing the capture device (122) against the nesting interface (135).

20. The traction system as claimed in claim 18 when dependent on claim 16, **characterized in that** the shuttle (114) has a convex shape adapted to be housed in a concave shape of the nesting interface (135) when the shuttle (114) is in the stowage configuration.

21. A method of controlling a captive wing traction system as claimed in claim 5 or in any one of claims 6 to 20 when dependent on claim 5, **characterized in that** it includes a phase of deploying and a phase of folding the traction wing (5) in which the second winch (12) is controlled conjointly with the first winch (11) so that the end of the stowage line (10) slides along the guide line (9) while the trajectory control flying element (7) is moved away from or toward the base platform (3).

22. The method as claimed in claim 21 of controlling a captive wing traction system as claimed in claim 7 or in any one of claims 8 to 20 when dependent on claim 7, **characterized in that** the phase of folding the traction wing (5) includes:
- a step of locking the stowage line (10) onto the guide line (9);
- a stowage step during which traction on the stowage line (10) drives traction on the guide line (9) and on the leading edge (16) of the traction wing (5).

23. The control method as claimed in either one of claims 21 or 22 for controlling a captive wing traction system as claimed in claim 10 or in any one of claims 11 to 20 when dependent on claim 10, **characterized in that** the folding phase includes:
- a step of disengaging the disengageable clamping element (25), the guide line (9) therefore being released;
- a step of traction on the stowage line (10) driving traction on the guide line (9) and on the additional line portion (24).

24. The control method as claimed in any one of claims 21 to 23 for controlling a captive wing traction system as claimed in claim 6 or in any one of claims 7 to 20 when dependent on claim 6, **characterized in that** the deployment phase and the folding phase include steps of hoisting or hauling down the traction wing (5) along the stowage mast (4), during which steps the stowage trolley (14) slides along the stowage mast (4) and the stowage line (10) is maintained under tension to hold the leading edge (16) of the traction wing (5) moored against the stowage mast (4).

25. The control method as claimed in any one of claims 21 to 24 of a captive wing traction system as claimed in claim 4 or in any one of claims 5 to 20 when dependent on claim 4, **characterized in that** it includes a flight phase during which the slider (15) is disposed on the receptacle of the trajectory control flying device (7) and the length of the stowage line (10) is controlled so as to maintain slack in the stowage line (10).
